# EUROPEAN PATENT SPECIFICATION

(11) **EP 0 466 284 B1**
(45) Date of publication and mention of the grant of the patent: **22.03.1995**
(21) Application number: 91202525.1
(22) Date of filing: 13.06.1989
(51) Int. Cl.: F24C 7/02, H05B 6/68, H05B 6/80

(54) **High-frequency heating apparatus**
Hochfrequenz-Heizapparat
Appareil de chauffage à haute fréquence

(30) Priority: 15.06.1988 JP 148925/88; 15.06.1988 JP 147529/88; 29.06.1988 JP 161383/88; 01.07.1988 JP 165220/88; 01.07.1988 JP 165221/88; 14.06.1988 JP 78982/88 U; 15.06.1988 JP 79919/88 U; 16.06.1988 JP 79721/88 U; 15.07.1988 JP 94310/88 U
(43) Date of publication of application: 15.01.1992
(62) Divisional of application: 89305949.3
(73) Proprietor: SHARP KABUSHIKI KAISHA, Osaka 545 (JP)
(72) Inventor: Morino, Taisuke, Suita-shi, Osaka-fu (JP); Tanaka, Mami, Yao-shi, Osaka-fu (JP); Kaneko, Fuminori, Matsubara-shi, Osaka-fu (JP); Ozaki, Takeyuki, Nara-shi, Nara-ken (JP); Akiyama, Shuichi, Matsubara-shi, Osaka-fu (JP)
(74) Representative: Brown, Kenneth Richard

(56) References cited:
- EP-A- 0 333 423
- EP-A- 0 347 161
- GB-A- 2 015 310
- US-A- 4 520 250
- US-A- 4 599 503
- US-A- 4 672 181
- US-A- 4 673 800
- US-A- 4 835 354

## Description

The present invention generally relates to types of heating apparatus and more particularly, to types of high-frequency heating apparatus such as electronic ranges, oven ranges, etc. in which the ingredients, for example, bread are loaded in a heating vessel placed in a heating chamber such that the ingredients are processed automatically from kneading to baking.

Oven ranges are already commercially available in which bread ingredients are automatically processed to bake bread from kneading to baking in a heating vessel loaded in a heating chamber. In conventional oven ranges, an annular ring is provided on a bottom of the heating vessel and a mating annular ring engageable with the annular ring of the heating vessel is provided on a bottom wall of the heating chamber in order to position the heating vessel on the bottom wall of the heating chamber. By inserting the heating vessel from above and rotating the heating vessel, the annular ring is brought into engagement with the mating annular ring. A downwardly oriented saw-toothed gear (face gear) is formed at the centre of the annular ring on the bottom of the heating vessel and an upwardly oriented mating saw-toothed gear (face gear) engageable with the face gear of the heating vessel is formed at the centre of the mating annular ring on the bottom wall of the heating chamber. Power for kneading the bread ingredients is transmitted through vertical engagement between the face gear and the mating face gear.

However, when bread is baked in conventional oven ranges, the following problems (1) to (3) arise:
(1) When removing the heating vessel from the heating chamber, it is necessary to displace the heating vessel upwards. Thus, if baked bread projects above the upper edge of the heating vessel, it is possible that the top of the bread will touch the top wall of the heating chamber during removal of the heating vessel from the heating chamber. Hence, in order to avoid such a problem, the heating vessel must have a large horizontal area and the bread must be flat and small in height.
(2) If the face gear and the mating face gear become misaligned, slip is produced between tooth surfaces of the face gear and those of the mating face gear. This results in noise generation during operation.
(3) In order to eliminate the above problem (2), the fit between the annular ring and the mating annular ring should be made tight. As a result, a large force is required to load and unload the heating vessel. Thus, in some cases, a user may inadvertently strike their hand against the wall of the heating chamber, thus scorching their hand.

The invention claimed in our European Patent 0 347 161, from which this application is divided, addresses this above-noted problem.

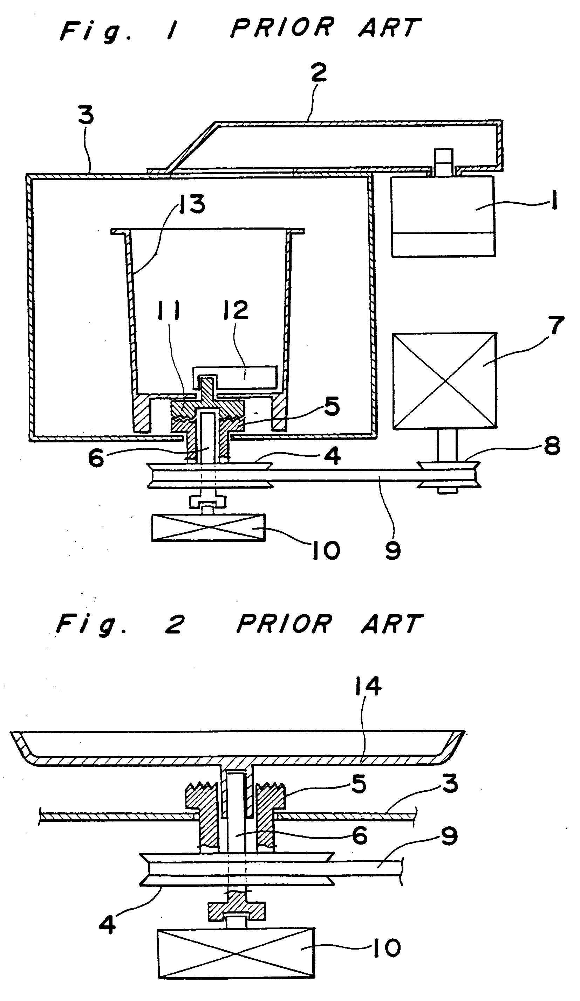

A type of high-frequency heating apparatus is known in which a heating vessel incorporating a stirring blade for kneading cooking materials and a turntable for rotating an article to be heated in order to eliminate nonuniform heating of the article are selectively loaded in a heating chamber. It has conventionally been a general practice that in order to eliminate nonuniform heating of the article, the article is placed on the turntable so as to heat while rotating the turntable. Furthermore, recently, a high-frequency heating apparatus has been proposed in which a heating vessel incorporating a stirring blade is loaded in a heating chamber. In this prior art high-frequency heating apparatus, bread ingredients, for example, flour, water, sugar, butter, yeast, etc. are kneaded by the stirring blade, fermented and then, baked to make bread. An example of such a high-frequency heating apparatus is described with reference to Figs. 1 and 2. Microwaves are introduced from a magnetron 1, through a waveguide 2, into a heating chamber 3. A cylindrical transmission shaft 5 formed integrally with a driven pulley 4 and a drive shaft 6 inserted into the transmission shaft 5 are rotatably mounted on a bottom portion of the heating chamber 3 so as to project into the heating chamber 3. Rotation of a high-speed motor 7 is transmitted to the transmission shaft 5 via a belt 9 trained over a motor pulley 8 and the driven pulley 4. The drive shaft 6 is directly coupled to a low-speed motor 10. A heating vessel 13 and a turntable 14 are selectively loaded in the heating chamber 3 as shown in Figs. 1 and 2, respectively. A coupling shaft 11 is rotatably mounted on a bottom portion of the heating vessel 13 and a stirring blade 12 is coupled with the coupling shaft 11.

When the heating vessel 13 has been installed in the heating chamber 3 as shown in Fig. 1, the coupling shaft 11 engages with the coupling shaft 5 so as to be coupled with the coupling shaft 5 such that the stirring blade 12 is rotated at a speed of tens to hundreds of revolutions per minute by the high-speed motor 7. As shown in Fig. 2, the turntable 14 is mounted on an upper portion of the drive shaft 6 for rotation at a speed of several revolutions per minute by the low-speed motor 10.

Thus, the stirring blade 12 and the turntable 14 are driven by motors 7 and 10 respectively. When dough is being made, the stirring blade 12 for kneading the bread ingredients is rotated at speeds of tens to hundreds of revolutions per minute as described above. If the turntable 14 were to be rotated at such a high speed, an article placed on the turntable 14 for heating is likely to be scattered and there is a high risk that the vessel containing the article would be broken.

In recent years there has been a demand for a compact and inexpensive high-frequency heating apparatus which can be operated with ease. However, the prior art high-frequency heating apparatus employing separate motors 7 and 10 for driving the stirring blade 12 and the turntable 14 is large and expensive, and the above described demand is not satisfied.

In its main aspect the present invention aims to alleviate this problem, and provides a heating apparatus wherein a heating vessel which includes a rotatable stirring blade for kneading cooking materials and a turntable for supporting an article to be heated are selectively and interchangeably loadable in a heating chamber, said heating apparatus comprising:
a drive motor for rotating the stirring blade when said heating vessel is loaded in said heating chamber and for rotating the turntable when said turntable is loaded in said heating chamber;
a detection means for detecting which of said heating vessel and said turntable is loaded in said heating chamber; and
a rotational speed changeover means for changing over a rotational speed of said drive motor on the basis of a result of detection of said detection means so as to provide different speeds of rotation for said turntable and said stirring blade.

Various further problems in prior art heating apparatus will now be described.

High-frequency heating apparatus are used for selectively heating a dielectric member by dielectric heating at high frequency. They are generally used in households as an electronic range. In recent years, the electronic range has become very popular as a cooking apparatus for heating various foods in addition to thawing and reheating of frozen foods.

Generally, when bread is being made the bread ingredients such as flour, butter, sugar, salt, yeast, water, etc. are put into a heating vessel incorporating a stirring blade for kneading the ingredients, kneaded and then, fermented at temperatures of 30 to 40°C. Thereafter, the bread ingredients are heated and baked at high temperatures. As a result, a long period of about 2 to 4 hours is required for making the bread.

When an electronic oven has a function that allows a cooking completion time to be preset so that bread is baked by the time when a user has woken up, a still longer period is required for completing cooking of the bread once the cooking has started. In cooking of the bread for such a long time, if a door of the electronic oven is kept open through improper operation by the user or mischief by children etc. during heating or during a waiting time after presetting the cooking completion time, heating may be held in a state of interruption. Even if the door is closed, heating will be held in a state of interruption unless a start heating operation is performed.

Even if the user restarts heating by closing the door after noticing that the door is has been left open, fermentation, for example, will have kept progressing whilst the door has been kept open. Thus the bread ingredients undergo excessive fermentation. Alternatively, if the door has been kept open during a baking process the temperature of the bread drops. The foregoing types of problems result in the bread insufficiently baked or having an inferior quality.

A high-frequency heating apparatus is known in which the heating vessel is made of a microwave absorbing heat generating material. When bread is baked in conventional high-frequency heating apparatus, the ingredients are initially kneaded in the heating vessel to make dough. Subsequently, the dough is fermented in the heating vessel and then, the heating vessel containing the dough is heated by microwaves to bake bread.

However, in conventional high-frequency heating apparatus, since the microwaves suddenly heat the heating vessel made of the microwave absorbing heat generating material, the temperature of the heating vessel is raised sharply. Hence, the surface of the dough, which is in contact with the heating vessel, is heated to a high temperature while temperature of the interior of the dough is not raised to such a high temperature. Due to there being a large difference in temperature between the surface and interior of the dough, it is likely that the surface of the dough is scorched before the interior of the dough is heated sufficiently.

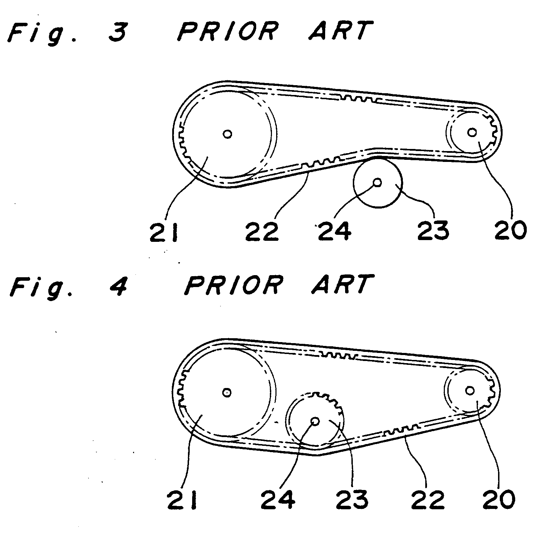

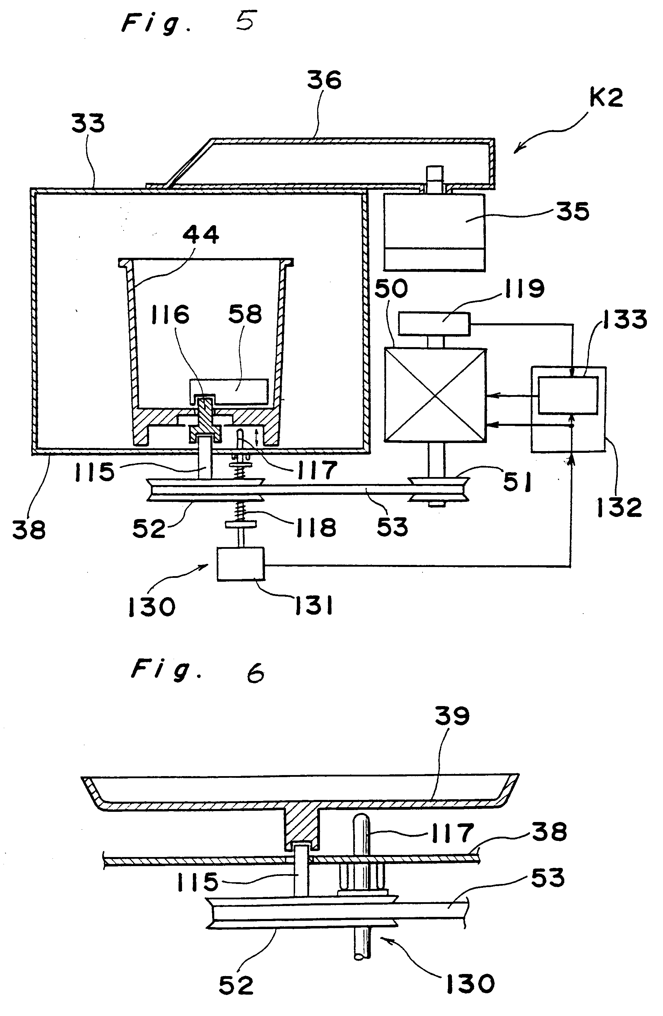

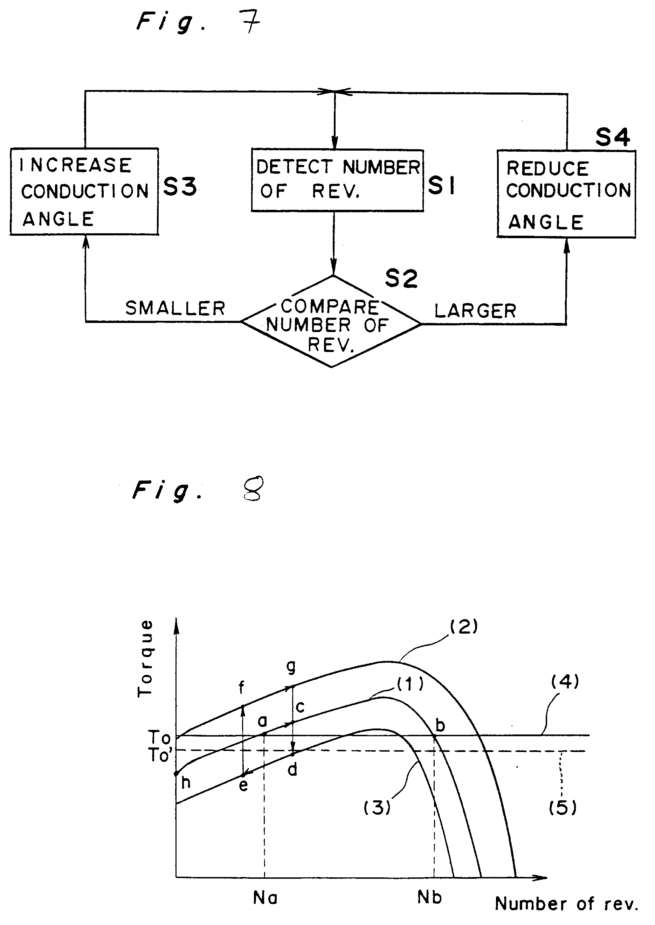

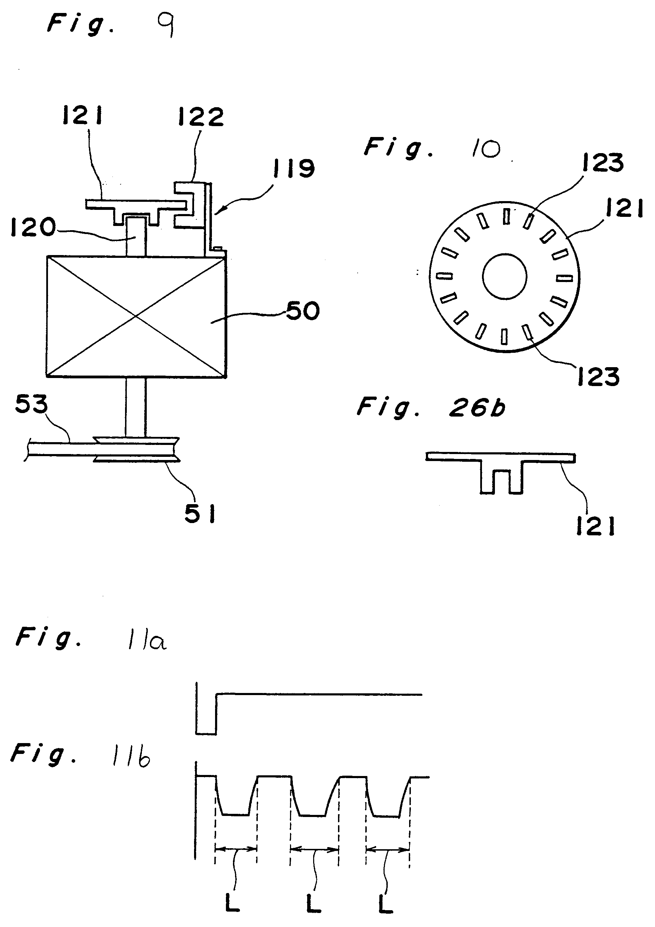

A timing belt mechanism shown in Fig. 3 or 4 is used as a power transmission mechanism for a conventional high-frequency heating apparatus. The timing belt mechanism includes two rotary members spaced a predetermined distance from each other, i.e. a driving pulley 20 and a driven pulley 21, and a timing belt 22. The timing belt 22 is trained over the pulleys 20 and 21 so as to transmit power. Furthermore, an idler pulley 23 acting as an auxiliary rotary member is provided either outside (Fig. 3) or inside (Fig. 4) an intermediate portion of the timing belt 22 and capable of rotating in the running direction of the timing belt 22, depresses the timing belt 22 so as to tension it. The idler roller 23 is rotatably supported by a shaft 24 mounted on a base member (not shown).

In the case where the idler pulley 23 is disposed outside the timing belt 22 as shown in Fig. 3, a winding angle of the timing belt 22 around the driving pulley 20 can be made larger than that of the arrangement of Fig. 4 in which the idler pulley 23 is disposed inside the timing belt 22. Such an arrangement improves the efficiency of power transmission over the arrangement shown in Fig. 4.

In such arrangements of the timing belt mechanism, not only are abnormal noises produced by the timing belt 22 touching, engaging and disengaging with the pulleys 20 and 21, but the tensioned timing belt 22 also vibrates due to load variations applied to the timing belt 22 which results in vibratory noise. Therefore, conventional high-frequency heating apparatus employing such timing belt mechanism suffer from the drawback that such abnormal and vibratory noise is produced.

According to subsidiary aspects of this invention, preferred additional features of the apparatuses described herein and claimed in the dependent claims are aimed at alleviating these further problems in the prior art.

For example, one subsidiary aim of the present invention is to provide a high-frequency heating apparatus which can be easily restarted after interruption of heating.

A further subsidiary aim of the present invention is to provide a high-frequency heating apparatus in which the temperature of a heating vessel is raised gradually so as to reduce the difference in temperature between the surface and the interior of the dough so that the surface of the dough is prevented from being scorched before the interior of the dough is sufficiently heated.

Another subsidiary aim of the present invention is to provide a high-frequency heating apparatus provided with a power transmission mechanism which can be operated silently through reduction of noises in the power transmission mechanism.

Some preferred embodiments of the invention will now be described by way of example with reference to the accompanying drawings, in which:
Fig. 1 is a schematic sectional view of a prior art high-frequency heating apparatus in which a heating vessel is loaded (already referred to);
Fig. 2 is a schematic fragmentary sectional view of the prior art apparatus of Fig. 1 in which a turntable is loaded (already referred to);
Figs. 3 and 4 are views showing arrangements of prior art timing belt mechanisms, respectively (already referred to);
Fig. 5 is a schematic sectional view of a high-frequency heating apparatus according to a first embodiment of the present invention, in which a heating vessel is loaded;
Fig. 6 is a schematic fragmentary sectional view of the apparatus of Fig. 5, in which a turntable is loaded;
Fig. 7 is a flow chart showing processing sequence of a rotational speed control means employed in the apparatus of Fig. 5;
Fig. 8 is a graph showing characteristics of relation between the number of revolutions and torque of a motor in rotational speed control of the rotational speed control means of Fig. 7;
Fig. 9 is a front elevational view of a rotational speed detecting means employed in the apparatus of Fig. 5;
Figs. 10a and 10b are a top plan view and a front elevational view of a disc of the rotational speed detecting means of Fig. 9, respectively;
Figs. 11a and 11b are wave form charts of an input signal and an output signal of the rotational speed detecting means of Fig. 9, respectively;
Fig. 12 is a block diagram of a control circuit of a rotational speed control means employed in the apparatus of Fig. 5;
Fig. 13 is a flow chart showing processing sequence of an abnormal rotation detecting means employed in the apparatus of Fig. 5;
Fig. 14 is a diagram showing cooking processes of bread in a high-frequency heating apparatus according to a second embodiment of the present invention, in which a door is kept closed during heating;
Fig. 15 is a diagram showing cooking processes of the apparatus of Fig. 14, in which the door was opened during heating;
Fig. 16 is a block diagram of a control device of the apparatus of Fig. 14;
Fig. 17 is a flow chart showing sequence of cooking of bread in the apparatus of Fig. 14;
Fig. 18 is a sectional view of the apparatus of Fig. 14, in which a heating vessel is loaded;
Fig. 19 is a perspective view of the apparatus of Fig. 14;
Fig. 20 is a diagram similar to Fig. 15, particularly showing a first modification of the apparatus of Fig. 14;
Fig. 21 is a block diagram of a control device of the apparatus of Fig. 20;
Fig. 22 is a sectional view of the apparatus of Fig. 20;
Fig. 23 is an enlarged fragmentary view of Fig. 22;
Figs. 24 to 28 are diagrams showing cooking processes in a second modification of the apparatus of Fig. 14;
Fig. 29 is a block diagram of a control device employed in a third modification of the apparatus of Fig. 14;
Fig. 30 is a diagram of a control circuit of the apparatus of Fig. 29;
Fig. 31 is a flow chart showing processing sequence of the apparatus of Fig. 29;
Fig. 32 is a block circuit diagram of a high-frequency heating apparatus according to a third embodiment of the present invention;
Fig. 33 is a diagram showing cooking processes of bread in the apparatus of Fig. 32;
Fig. 34 is a flow chart showing processing sequence of the apparatus of Fig. 32;
Fig. 35 is a diagram showing on-off characteristics of microwave output of the apparatus of Fig. 32;
Fig. 36 is a graph showing characteristics in control of Fig. 34;
Fig. 37 is a flow chart of processing sequence of the apparatus of Fig. 32;
Fig. 38 is a flow chart showing processing sequence of a modification of the apparatus of Fig. 32;
Fig. 39 is a graph showing characteristics in control of the apparatus of Fig. 38;
Fig. 40 is a flow chart showing sequence of cooking of bread in a high-frequency heating apparatus according to a fourth embodiment of the present invention;
Fig. 41 is a graph showing relation between period of irradiation of microwave and heating temperature in a heating stage of the apparatus of Fig. 40;
Figs. 42 and 43 are graphs showing difference in temperature between a surface and an interior of dough in the apparatus of Fig. 40 and a prior art apparatus, respectively;
Fig. 44 is a circuit diagram of a high-frequency heating apparatus according to a fifth embodiment of the present invention;
Fig. 45 is a flow chart showing processing sequence of the apparatus of Fig. 44;
Fig. 46 is a schematic view of the apparatus of Fig. 44;
Fig. 47 is an enlarged sectional view of a high-frequency heating apparatus according to a sixth embodiment of the present invention; apparatus of Fig. 32;
Fig. 48 is a block circuit diagram of the apparatus of Fig. 47;
Fig. 49 is a side elevational view showing a modification of the apparatus of Fig. 47;
Fig. 50 is a front elevational view of the apparatus of Fig. 49;
Fig. 51 is an enlarged sectional view of the apparatus of Fig. 49;
Fig. 52 is a perspective view of a projection of the apparatus of Fig. 49;
Fig. 53 is a sectional view of a timing belt mechanism employed in a high-frequency heating apparatus according to a seventh embodiment of the present invention;
Fig. 54 is a bottom view observed in the direction of the arrow LXX in Fig. 53;
Fig. 55 is a partially sectional front elevational view of an idler pulley employed in the timing belt mechanism of Fig. 53; and
Fig. 56 is a view similar to Fig. 55, particularly showing its modification.

Before the description of the present invention proceeds, it is to be noted that like parts are designated by like reference numerals throughout several views of the accompanying drawings.

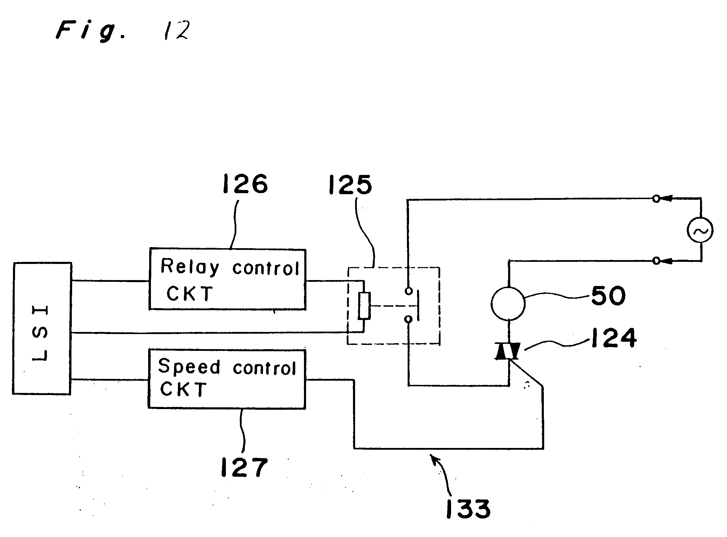

Referring now to Figs. 5 to 11a and 11b of the drawings, there is shown a high-frequency heating apparatus K2 according to a first embodiment of the present invention. In the apparatus K2, a shaft 115 is secured to the driven pulley 52 and is rotatably supported by the bottom wall 38 so as to be projected into the heating chamber 33 from the bottom wall 38. A coupling shaft 116 is provided on the heating vessel 44 so as to be mounted on an upper portion of the shaft 115 such that the stirring blade 58 is secured to the coupling shaft 116. Furthermore, a detection means 130 is provided and includes a detection rod 117, a coiled spring 118 for urging the detection rod 117 upwardly and a detection mechanism 131 for deciding, based on the vertical position of the detection rod 117, whether the heating vessel 44 or the turntable 39 has been loaded in the heating chamber 33. The detection rod 117 is retractably projected in a vertical direction from the bottom wall 38 into the heating chamber 33. A rotational speed changeover means 132 is provided so as to change over the rotational speed of the electric motor 50 in response to detection signals from the detection means 130. Since the electric motor 50 is a high-speed motor suitable for driving the stirring blade 58 of the heating vessel 44, the rotational speed changeover means 132 is adapted to decelerate the electric motor 50 when the turntable 39 is detected within the heating chamber 33. The rotational speed changeover means 132 may be based on any one of known methods such as voltage control, phase control, frequency control, intermittent control, etc. In order to perform feedback control of the electric motor 50 by the rotational speed control means 133 so as to operate the electric motor 50 at the rotational speed set by the rotational speed changeover means 132, a rotational speed detecting means 119 for detecting the rotational speed of the electric motor 50 is provided.

Hereinbelow, operation of the apparatus K2 is described with reference to Figs. 7 to 11a and 11b. Initially, when the heating vessel 44 has been loaded into the heating chamber 33 as shown in Fig. 5, the coupling shaft 116 is mounted on the upper portion of the shaft 115 so as to be coupled to the shaft 115. At this point, the detection rod 117 is depressed downwardly to a power position against an urging force of the coiled spring 118 and thus, the detection mechanism 131 detects, based on the lower position of the detection rod 117, that the heating vessel 44 has been loaded in the heating chamber 33. In response to this detection signal from the detection means 130, the rotational speed changeover means 132 changes over the rotational speed of the electric motor 50. Namely, the stirring blade 58 is rotated at a speed corresponding to a rated rotational speed of the electric motor 50 when electric power is supplied to the electric motor 50 without any control. The electric motor 50 is driven at the rated rotational speed and the rotational speed of the electric motor 50 is reduced to a predetermined rotational speed for the stirring blade 58 corresponding to the ratio of the diameter of the driving pulley 51 to that of the driven pulley 52.

In the case where the turntable 39 has been loaded in the heating chamber 33 as shown in Fig. 6, a bottom face of the turntable 39 is disposed above the detection rod 117, so that the detection rod 117 is not depressed by the turntable 39 and thus, the detection means 130 detects that the turntable 39 has been loaded in the heating chamber 33. As a result, the rotational speed of the electric motor 50 is changed to 10% of that for the heating vessel 44. In this mode, the relation between the number of revolutions and the torque of the electric motor 50 is expressed by the characteristic curve (1) of Fig. 8. Assuming that the torque applied to the electric motor 50 has a value To shown by the line (4), then the line (4) intersects with the curve (1) at points a and b. The number Na of revolutions at point a shows the rotational speed corresponding to the turntable 39, while the number Nb of revolutions at the point b shows the rotational speed corresponding to the heating vessel 44. Therefore, if the electric motor 50 is operated at the point b, the number Nb of revolutions at the point b is the rated number of revolutions of the electric motor 50 and thus, the electric motor 50 is rotated stably. On the other hand, if the electric motor 50 is operated at point a, the torque applied to the electric motor 50 upon rotation of the turntable 39 is not constant and therefore is unstable and varies, for example, to a value To' shown by the line (5). In response to the variations, either the number of revolutions is increased along the characteristic curve (1) to the value Nb such that the electric motor 50 is driven at the point b or rotation of the electric motor 50 is stopped at the point h.

Thus in order to avoid the foregoing situation, the rotational speed of the electric motor 50 is detected by the rotational speed detecting means 119 and fed back to the rotational speed control means 133 in order to control the motor 50 based on a value detected by the rotational speed detecting means 119. As shown in Figs. 9, 10a and 10b, the rotational speed detecting means 119 includes a disc 121 mounted coaxially on the output shaft 120 of the electric motor 50 and a U-shaped photo interrupter 122. The photo interrupter 122 allows a part of the disc 121 to pass between the leg portions of the photo interrupter 122. As shown in Figs. 10a, a plurality of slits 123 are formed along a peripheral edge of the disc 121 at equal intervals. Accordingly, if a signal having a wave form of Fig. 11a is input to the photo interrupter 122, an output signal from the photo interrupter 122 is in the form of pulses and has the waveform of Fig. 11b in response to the rotation of the disc 121 rotating together with the electric motor 50. In the waveform of Fig. 11b, portions L correspond to the slits 123. As the rotational speed of the electric motor 50 is increased, the period of the pulse waveform is shortened. On the contrary, as the rotational speed of the electric motor 50 is reduced, the period of the pulse waveform is increased. Therefore, by reading the number of the output pulses of the photo interrupter 122 by an LSI (not shown), the rotational speed of the electric motor 50 can be detected.

Phase control of the rotational speed control means 133 is described with reference to a flow chart of Fig. 7 and Fig. 8, hereinbelow. At step S1, the number of revolutions per minute, i.e. rotational speed of the electric motor 50 is detected by the rotational speed detecting means 119. Then, at step S2, the detected rotational speed is compared with a predetermined rotational speed. If the detected rotational speed is identical with the predetermined rotational speed, the electric motor 50 is operated at, for example, point a of the characteristic curve (1) of Fig. 8 and the torque of the electric motor 50 coincides, at point a, with the torque applied to the electric motor 50. However, if the torque applied to the electric motor 50 becomes smaller than the value To so as to assume the value To', the point of operation of the electric motor 50 is displaced from point a to point c along the characteristic curve (1), and the rotational speed detecting means 119 detects at step S2 that the rotational speed of the electric motor 50 has been increased excessively. Thus, at step S4, feedback control is performed by the rotational speed control means 133 such that the conduction angle is reduced, so that the point of operation of the electric motor 50 is set to point d of the characteristic curve (3). Since the torque To' applied to the electric motor 50 becomes larger than the torque of the electric motor 50 at point d, the rotational speed of the electric motor 50 drops so as to proceed towards point e along the characteristic curve (3). When the rotational speed of the electric motor 50 has dropped to point e, the rotational speed detecting means 119 detects at step S2 that the rotational speed of the electric motor 50 has dropped excessively. Hence, at step S3, feedback control is performed by the rotational speed control means 133 such that the conduction angle is increased. Thus, the point of operation of the electric motor 50 proceeds towards point f on the characteristic curve (2). Since the torque of the electric motor 50 at point f is larger than the torque To' applied to the electric motor 50, the rotational speed of the electric motor 50 is increased towards point g along the characteristic curve (2). Subsequently, the above described operations are repeated in a loop of the points d, e, f and g. As a result, the rotational speed of the electric motor 50 is controlled so as to assume the value Na for the turntable 39.

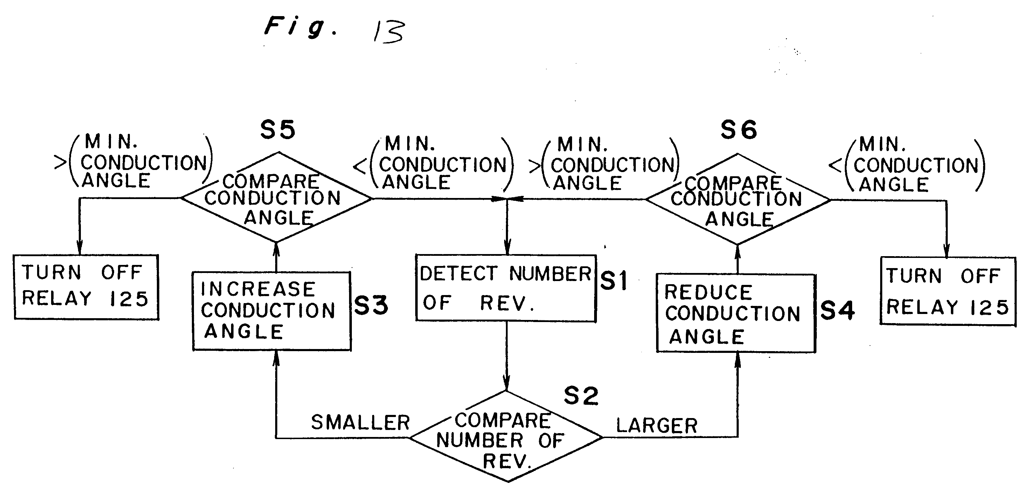

Control of abnormal rotation of the electric motor 50 is described with reference to Figs. 12 and 13. When a triac 124 for controlling the operation of the electric motor 50 has been short-circuited in Fig. 12, the electric motor 50 is caused to be rotated at the rated rotational speed at all times. Thus, a loop of steps S1, S2 and S4 is repeated. However, by setting a minimum conduction angle as shown in Fig. 13 in order to compare the conduction angle with the minimum conduction angle at step S6, abnormal rotation of the electric motor 50 can be detected and thus, the power supply to the electric motor 50 can be shut off by turning off a relay 125 of Fig. 12.

Alternatively, when the triac 124 has been set in an open state, it is decided at step S5 of Fig. 13 that the electric motor 50 has been stopped. When the photo interrupter 122 of the rotational speed detecting means 119 functions abnormally, a decision is made in the same manner as in the case where the relay 125 is held in the OFF state and the triac 124 is in an open state.

The rotational speed detecting means 119 is not restricted to the above described optical means but can be replaced by a known member such as an encoder.

As is clear from the foregoing, in the high-frequency heating apparatus K2 according to the first embodiment of the present invention, both the heating vessel and the turntable having different rotational speeds can be driven by the single motor by changing the rotational speed of the motor. Therefore, the apparatus K2 is made structurally simple by reducing the number of components and can not only be made considerably compact but produced at low cost. Furthermore, in the case of abnormal rotation of the motor, the motor is stopped so as to eliminate any danger to the operator.

Since the motor has a rated rotational speed corresponding to the rotational speed for the stirring blade of the heating vessel and the rotation of the motor is subjected to feedback control whilst driving the turntable having rotational speed lower than that of the stirring blade by detecting the rotational speed of the motor, low-speed rotation of the high-speed motor can be performed quite stably, so that the two members to be driven, i.e. the heating vessel and the turntable, can be driven smoothly by the motor.

The present invention is not limited to the above described embodiment and can be variously modified or changed. For example, an electric heater (not shown) can also be employed as a heating source. In order to promote generation of heat, a film made of material which generates heat upon absorption of microwave, for example, silicon carbide is formed on the surface of the heating vessel 44.

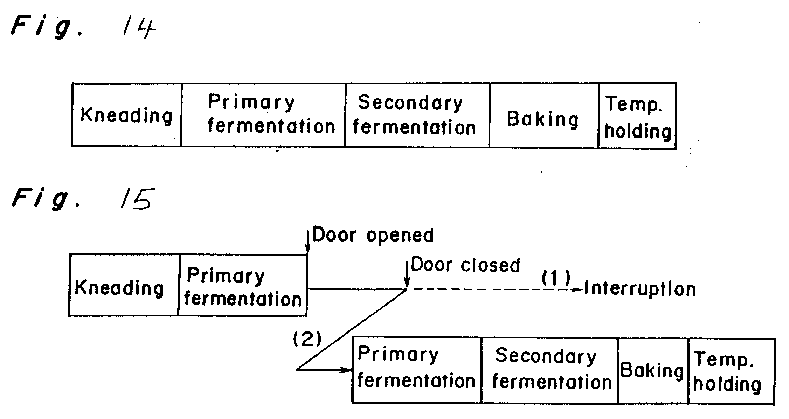

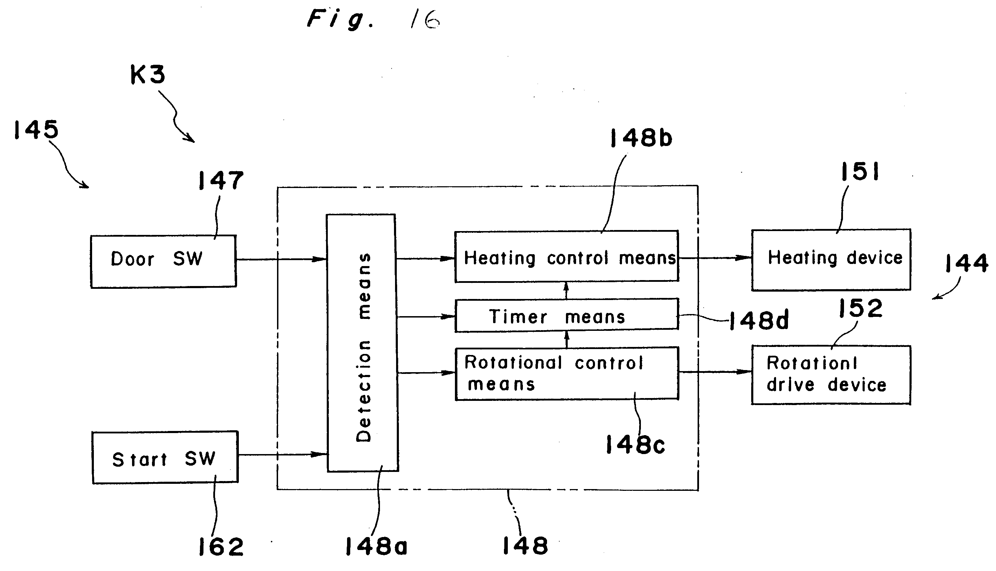

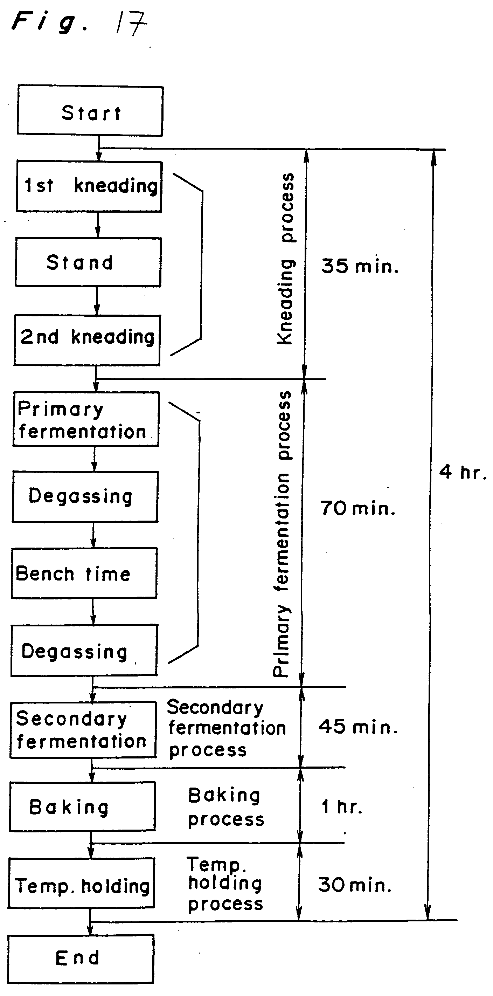

Referring further to Figs. 14 to 19, there is shown a high-frequency heating apparatus K3 according to a second embodiment of the present invention. As shown in Figs. 16 and 18, the apparatus K3 includes a drive unit 144 for heating and driving the heating vessel 44 detachably loaded in the heating chamber 33, and a control unit 145 for controlling the drive unit 144.

The control unit 145 includes a door switch 147 for detecting the opening and closing of the door 34 of the heating chamber 33, and a control circuit 148. The control circuit 148 is arranged to stop operation of the drive unit 144 in response to a signal from the door switch 147 indicating opening of the door 34, and to automatically restart the drive unit 144 in response to a signal from the door switch 147 indicating closing of the door 34.

The heating vessel 44 is used for making bread by performing all the cooking processes therein including kneading, fermenting, baking and temperature holding. A film which generates heat upon absorption of microwave is formed on an outer periphery of the heating vessel 44.

The drive unit 144 comprises a heating device 151 for heating an article in the heating vessel 44, and a rotational drive device 152 for rotating the stirring blade 58 in the heating vessel 44.

As shown in Fig. 18, the heating device 151 is constituted by the magnetron 35 and the waveguide 36. The rotational drive device 152 is constituted by the electric motor 50 mounted on the apparatus housing 31, the driving pulley 51 secured to the output shaft of the electric motor 50, the shaft 115 rotatably supported by the bottom wall 38 of the heating chamber 33, the driven pulley 52 mounted on the lower end of the shaft 115, the belt 53 trained over the pulleys 51 and 52 and the coupling shaft 116 for coupling the shaft 115 with the stirring blade 58.

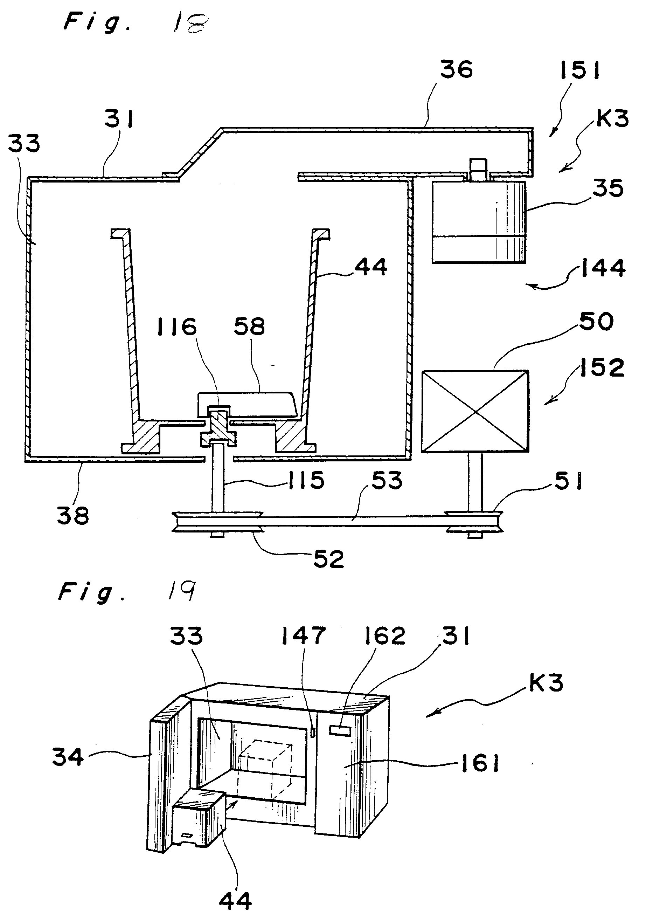

As shown in Fig. 19, the door 34 is adapted to open and close the front opening of the heating chamber 33, and the door switch 147 is provided on a front wall of the apparatus housing 31. An operating panel 161 provided on the front wall of the apparatus housing 31 includes a start switch 162.

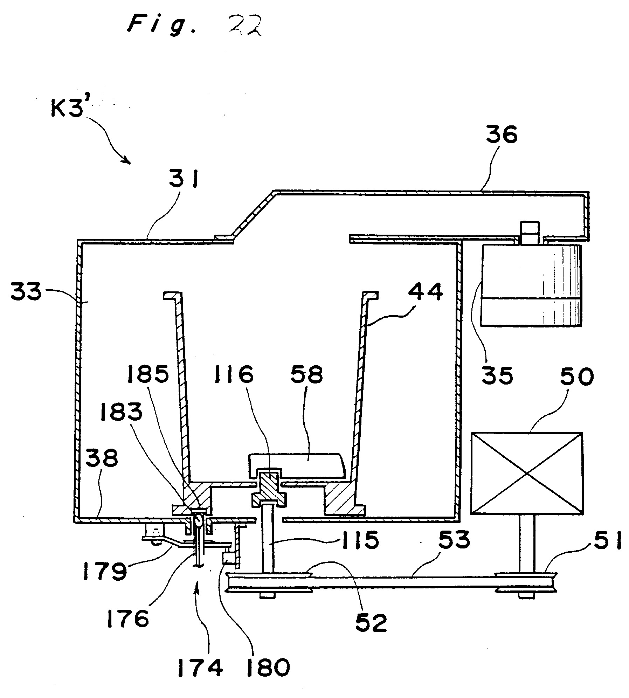

The control circuit 148 is formed by a general one-chip microcomputer and incorporates a RAM, a ROM, an ALU, etc. As shown in Fig. 16, the control circuit 148 consists of a detection means 148a for detecting ON and OFF states of the door switch 147 and the start switch 162, a heating control means 148b for controlling the heating device 151 according to the output from the detection means 148a, a rotational control means 148c for controlling the rotational drive device 152 according to the output from the detection means 148a, and a timer means 148d for controlling the heating control means 148b and the rotational control means 148c according to the output from the detection means 148a. During heating employing the heating vessel 44, the heating control means 148b and the rotational control means 148c output an operational stop signal in response to the door switch 147 outputting a signal that the door 34 has been opened and outputting an operational signal in response to the door switch 147 outputting a signal indicating that the door 34 has been closed. A decision as to whether or not heating is to be performed by using the heating vessel 44 can be made either by an ON signal from a selection switch (not shown) for selecting bread baking, which is provided on the operating panel 161, or by a detection switch for detecting the heating vessel 44, which is provided on the bottom wall 38 of the heating chamber 33 as shown in Fig. 22.

The heating control means 148b outputs a pulse width modulation signal to an inverter circuit (not shown) for driving the magnetron 35 and causes the width of the pulses to change the output of the inverter circuit in order to vary the heating temperature of the heating vessel 44. The timer means 148d stores remaining periods of the cooking processes when interruption of heating employing the heating vessel 44 occurs, so as to control the heating control means 148b or the rotational control means 148c for the remaining periods at the time of restarting.

Operation of the apparatus K3 is described, hereinbelow. Fig. 14 shows a case in which the door 34 was not opened during heating, while Fig. 15 shows a case in which the door 34 was opened during heating. In Fig. 15, when the door 34 was opened during primary fermentation and was closed again, heating is held in an interrupted state as shown in the broken line (1) in known apparatuses incapable of performing automatic start, unless the start switch 162 is depressed. However, in the apparatus K3 having a function of performing automatic start, heating is continued as shown in the solid line (2) of Fig. 15 even if the start switch 162 is not depressed. Thus, defective operation of the apparatus K3 due to improper operation or children's mischief can be obviated.

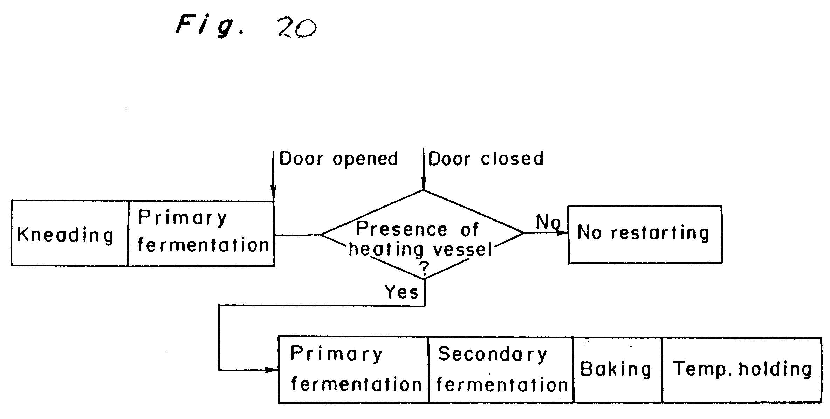

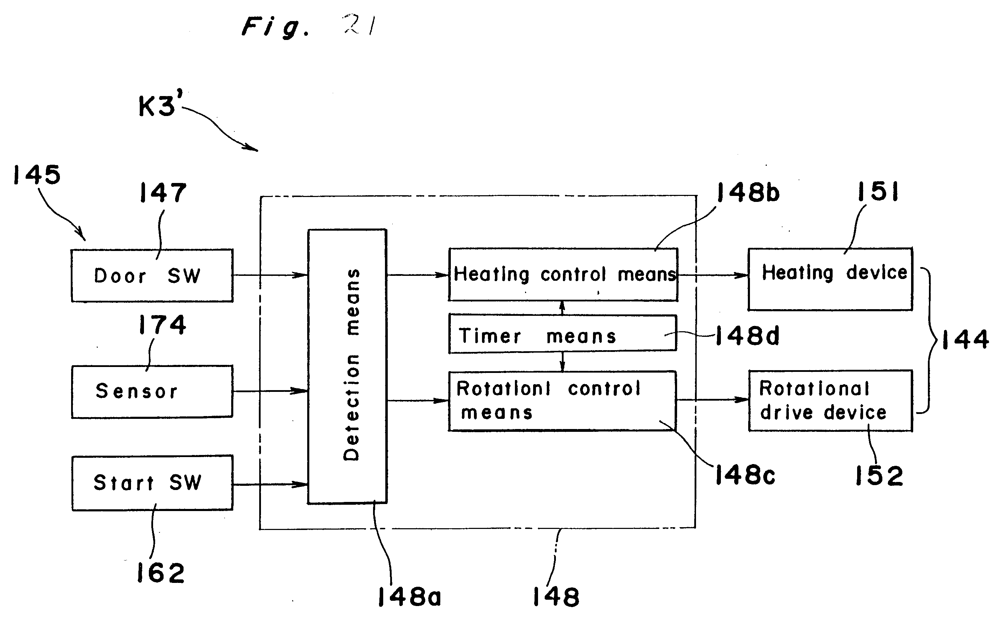

Hereinbelow, a first modification K3' of the apparatus K3 is described with reference to Figs. 20 to 23. The control unit 145 includes the door switch 147 for detecting opening and closing of the door 34 of the heating chamber 33, a sensor 174 for detecting the presence or absence of the heating vessel 44, and the control circuit 148. The control circuit 148 is arranged to stop the drive unit 144 during actuation of the drive unit 144 in response to the door switch 147 outputting a signal indicating that the door 34 has been opened. Subsequently when the door switch 147 outputs a signal indicating that the door 34 has been closed and the sensor 174 outputs a signal indicating the presence of the heating vessel 44, the control circuit 148 outputs a signal for automatically restarting the drive unit 144. Namely, the control circuit 148 is set such that heating is not restarted when the heating vessel 44 is not loaded in the heating chamber 33 in the case where the door 34 has been closed after interruption of bread baking.

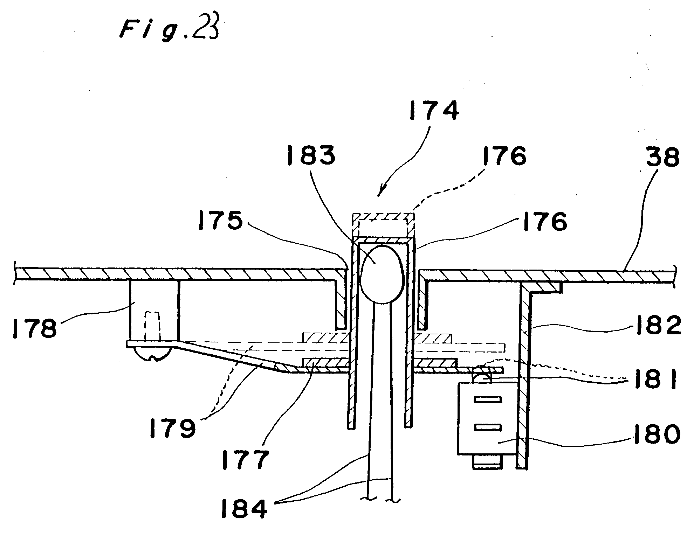

As shown in Figs. 22 and 23, the sensor 174 includes a tube 176, an elastic plate 179 and a detection switch 180 having a contact 181. The tube 176 is retractably fitted into a hole 175 in the bottom wall 38 of the heating chamber 33. The elastic plate 179 supports a flange 177 formed around an outer periphery of the tube 176, and one end of the elastic plate 179 is attached to a boss 178 secured to a lower face of the bottom wall 38. The detection switch 180 is attached to a bracket 182 fixed to the lower face of the bottom wall 38 and is turned on by downward movement of the elastic plate 179 by the elastic plate 179 touching contact 181. A temperature detecting element 183 having lead wires 184 is inserted into the tube 176, and an opening 185 is formed on a lower face of the heating vessel 44 and is adapted to receive an upper end portion of the tube 176. On loading the heating vessel 44 into the apparatus K3', the tube 176 is depressed downwards by the heating vessel 44 and thus brings the elastic plate 179 into contact with the contact 181 thereby turning on detection switch 180.

The apparatus K3' is operated as follows. If the heating vessel 44 is loaded in the heating chamber 33 when the door 34 has been closed after having previously been opened, the drive unit 144 is restarted. Alternatively, if the heating vessel 44 is not loaded in the heating chamber 33 at this time, the drive unit 144 is not restarted. A decision as to whether or not the heating vessel 44 is loaded in the heating chamber 33 is determined by the vertical position of the tube 176 of the sensor 174. When the heating vessel 44 has been loaded in the heating chamber 33, the upper end portion of the tube 176 is fitted into the opening 185 of the heating vessel 44 and is capable of being depressed downwardly. Therefore, the elastic plate 179 is also depressed downwardly and thus, is brought into contact with the contact 181 which turns on the detection switch 180, such that an ON signal from the detection switch 180 is fed to the control circuit 148. Thus, malfunction at the time of restarting of heating after the user's intentional interruption of heating can be prevented.

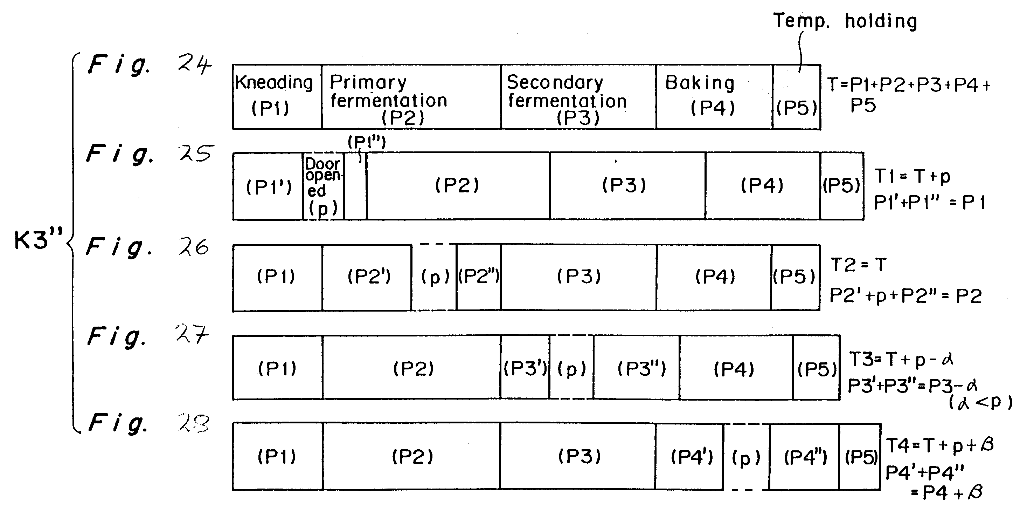

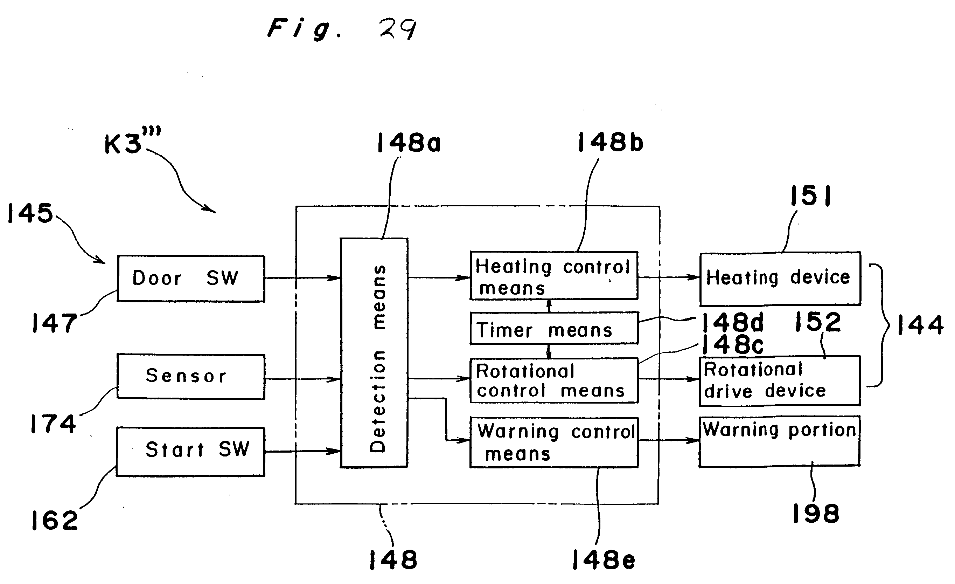

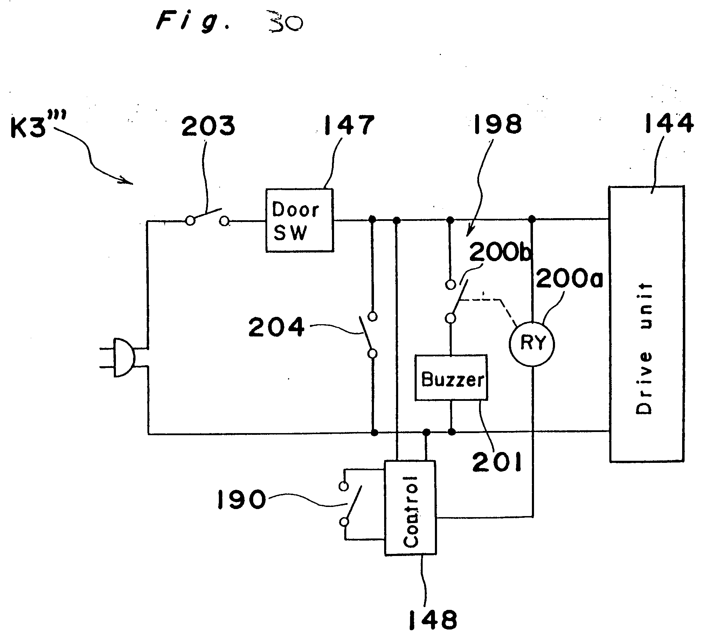

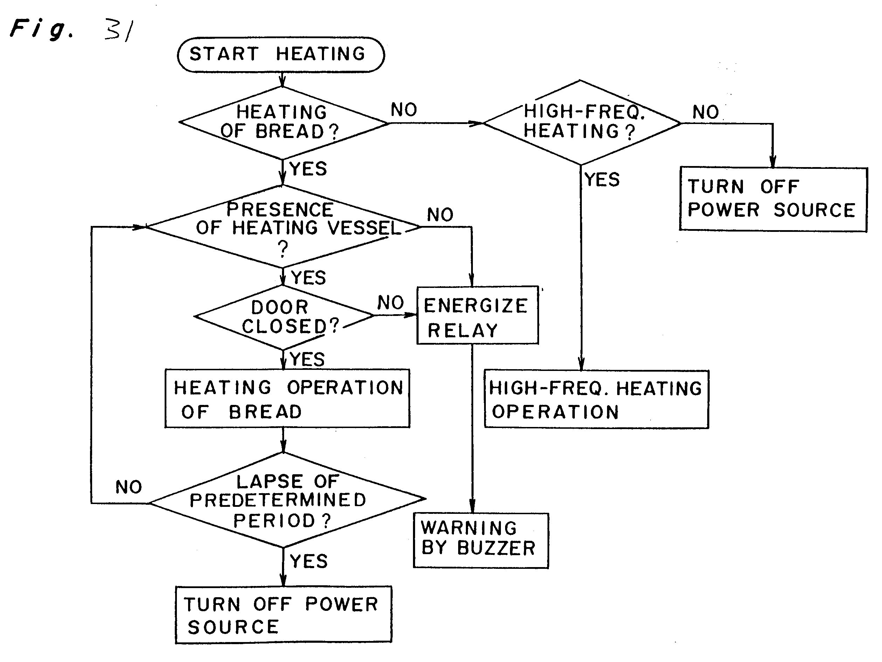

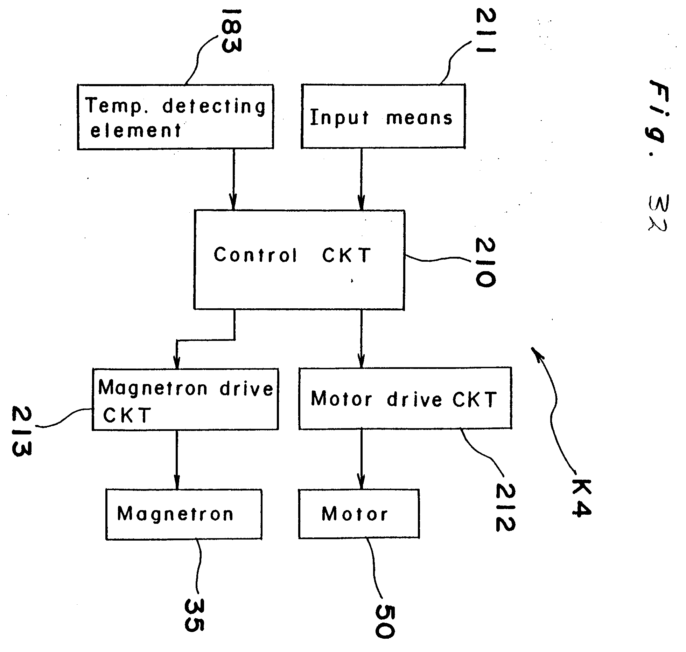

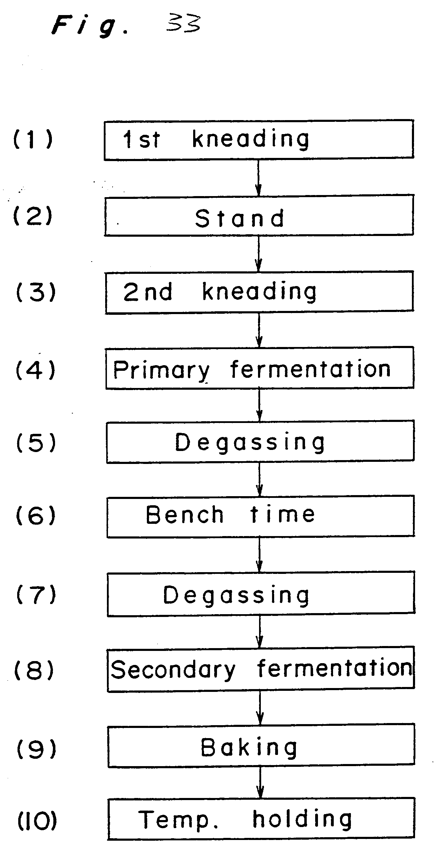

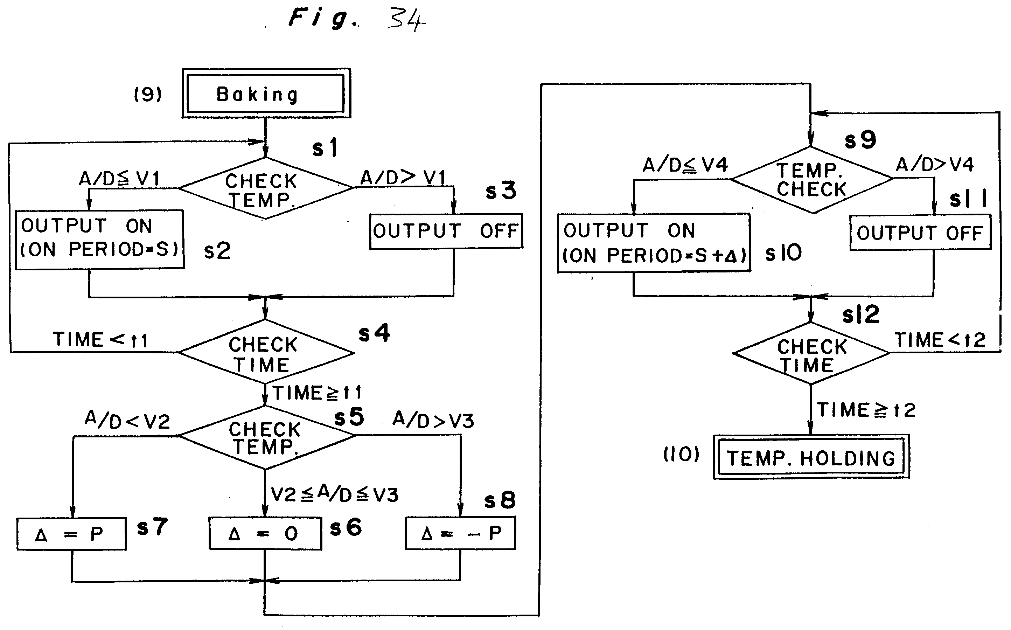

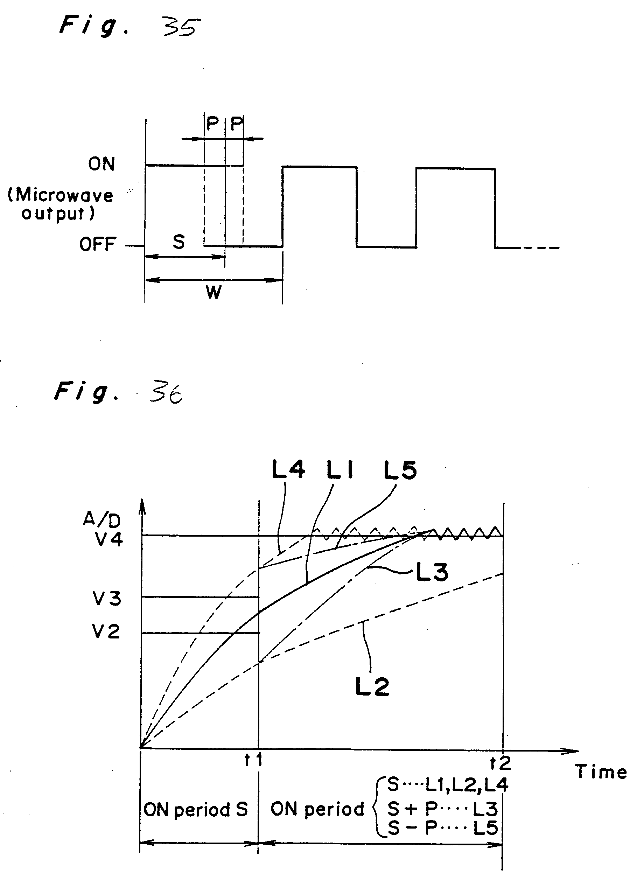

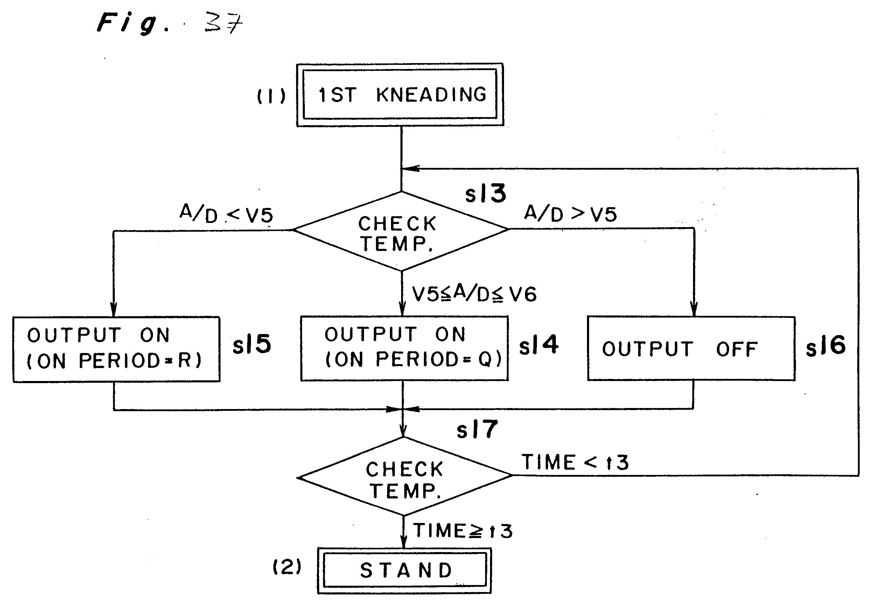

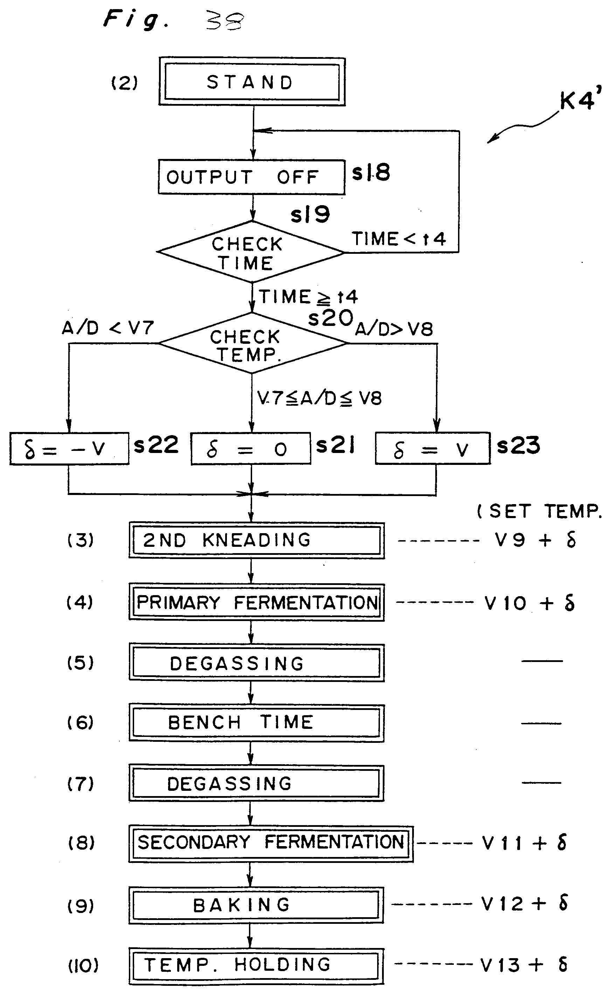

A second modification K3'' of the apparatus K3 is described with reference to Figs. 24 to 28. Fig. 24 shows a case in which the door 34 was not opened during heating. Fig. 25 shows a case in which the door 34 was opened during the kneading process and Fig. 26 shows a case in which the door 34 was opened during the primary fermentation process. Fig. 27 shows a case in which the door 34 was opened during the second fermentation process and Fig. 28 shows a case in which the door 34 was opened during the baking process. In apparatus K3'', the heating control means 148b and the rotational control means 148c of the control circuit 148 are arranged such that the cooking period after restarting of cooking is changed in accordance with the period during which the door 34 was open during cooking and the cooking process in operation at the time of opening the door. Since other constructions of the apparatus K3'' are similar to those of the apparatus K3', description thereof is abbreviated for the sake of brevity. In Figs. 24 to 28, characters P1, P2, P3, P4 and P5 denote periods of the kneading process, the primary fermentation process, the secondary fermentation process, the baking process and the temperature holding process, respectively, while characters T, T1, T2, T3 and T4 denote total cooking periods of Figs. 24, 25, 26, 27 and 28, respectively. Character p denotes a period during which the door 34 was opened. Furthermore, in the case where the door 34 has been opened during a cooking process, prime (') denotes a first period of one cooking process before opening of the door 34 and double prime ('') denotes a second period of the cooking process after opening of the door 34.

When the door 34 has been opened during the kneading process as shown in Fig. 25, a sum of a first period A' and a second period A'' of the kneading process is set to be equal to the period A of the kneading process thereby ensuring sufficient kneading. Therefore, the total cooking period T1 of Fig. 25 is expressed by (T+p).

In Fig. 26, the door 34 is opened during the primary fermentation process. Since primary fermentation takes place continuously even when the door 34 is open, a sum of the periods P2', p and P2'' can be equal to the period P2 and thus, the total cooking period T2 is equal to the total cooking period T of Fig. 24.

In Fig. 27, the door 34 is opened during the secondary fermentation process. Since the temperature of the dough during the secondary fermentation process is slightly higher than that of the primary fermentation process, it is considered that the temperature of the dough drops when the door 34 is open during the secondary fermentation process. Therefore, a sum of the periods P3' and P3'' is set to be equal to (P3-α). Namely, $\text{P3'+P3''=P3-α}$ where α is a value smaller than the period p. Accordingly, the total cooking period T3 is expressed by ( $\text{T+p-α}$ ).

In Fig. 28, the door 34 is opened during the baking process. Since heating is performed at about 150°C during the baking process, a sum of the periods P4' and P4'' is set to be equal to (P4+β). Namely, $\text{P4'+P4''=P4+β}$ where β is a value larger than 0. Thus, the total cooking period T4 is expressed by ( $\text{T+p+β}$ ).

Accordingly, in apparatus K3'', even if the period during which the door 34 is open is relatively long, finished bread has uniform quality.

Hereinbelow, a third modification K3''' of the apparatus K3 is described with reference to Figs. 29 to 31. As shown in Fig. 29, the control unit 145 includes the door switch 147 for detecting opening and absence of the door 34 of the heating chamber 33, a warning portion 198 for issuing a warning of abnormal operation of the apparatus K3''' to the user and the control circuit 148. In response to a signal from the door switch 147 indicating that the door 34 has been opened or a signal from the sensor 174 indicating the absence of the heating vessel 44, the control circuit 148 outputs to the warning portion 198, a signal for commanding the warning portion 198 to issue the warning to the user. Namely, the control circuit 148 of the apparatus K3''' includes a warning control means 148e in addition to the elements 148a to 148d of the control circuit 148 of the apparatus K3'.

As shown in Fig. 30, the warning portion 198 is constituted by a relay coil 200a connected to an output terminal of the control circuit 148, a relay contact 200b to be turned on and off by the relay coil 200a and a warning buzzer 201 connected in series to the relay contact 200b. Reference numerals 203 and 204 denote a latch switch and a monitor switch, respectively. Since other constructions of the apparatus K3''' are similar to those of the apparatus K3', description thereof is abbreviated for the sake of brevity.

In the apparatus K3''' of the above described arrangement, when the heating vessel 44 for kneading and heating bread, etc. has been loaded in the heating chamber 33, the detection switch 180 is turned on. If the door 34 is open at this time, the door switch 147 is in the OFF state. Thus, a signal is transmitted from the control circuit 148 to the relay coil 200a in order to activate the warning buzzer 201. This function is also performed before heating begins when the door 34 has been closed without loading the heating vessel 44 in the heating chamber 33. However, this function is not performed during high-frequency heating.

Therefore, when bread is made by using the apparatus K3''', the problem of the user failing to load the heating vessel 44 in the heating chamber 33 is avoided. Accordingly, in the case of bread baking, excessive fermentation or insufficient baking which occurs when heating has been interrupted by opening the door 34 during cooking processes can be avoided.

The means for issuing the warning to the user is not limited, to the above mentioned buzzer, but can be modified variously.

As will be seen from the foregoing, in the second embodiment of the present invention, even if heating is interrupted by opening the door when automatic cooking is performed by using the heating vessel, heating is automatically restarted by merely closing the door again. Therefore, since heating can be continued without depressing the start switch, defective cooking due to improper operation or children's mischief can be eliminated.

Furthermore, in the second embodiment of the present invention, if the door is closed again in a state where the heating vessel has been taken out of the heating chamber by opening the door, heating is not restarted automatically. Hence, heating without loading the heating vessel in the heating chamber can be obviated and erroneous operation at the time of restarting of heating after the user's intentional interruption of heating can be prevented.

Moreover, in the second embodiment of the present invention, if the door is opened during heating or after setting of reserved heating, the apparatus informs the user that the door is open. Hence, when bread is made, the user does not fail to load the heating vessel in the heating chamber. Therefore, excessive fermentation or insufficient baking which occurs when heating has been interrupted by opening the door during cooking processes whose periods affect quality of finished bread can be prevented. Accordingly, such an excellent effect is obtained that restarting of heating after interruption of heating can be performed easily.

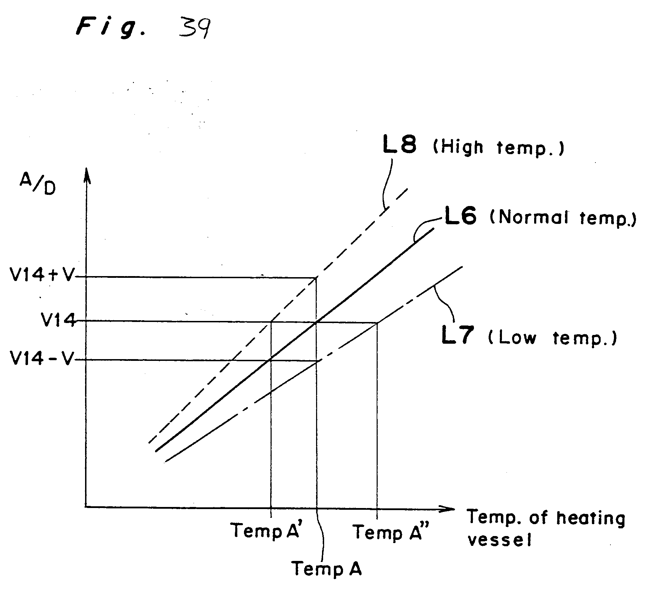

Hereinbelow, a high-frequency heating apparatus K4 according to a third embodiment of the present invention is described with reference to Figs. 32 to 37. Since main constructions of the apparatus K4 are similar to those of the apparatus K3' of Fig. 22, description thereof is abbreviated for the sake of brevity. The third embodiment of the present invention is characterized in that when the bread dough is kneaded, it is heated to a predetermined temperature of about 28°C. Referring to Fig. 32, a control circuit 210 controls the whole operation of the apparatus K4 and stores a control program as shown in Fig. 33 for making bread. Bread is made following the cooking processes shown in Fig. 33.

Fig. 34 is a flow chart showing the baking process of the ninth step of Fig. 39 in detail. Until a predetermined period t1 elapses, steps s1 to s4 are repeated. Upon expiry of the predetermined period t1, temperature comparison is made at step s5. Namely, if a value A/D which is input to the control circuit (LSI) 210 as temperature information from the temperature detecting element 183 is smaller than a preset value V2, a factor Δ is set to a value P at step s7. The ON period of S of the microwave output is then increased by P to (S+P) at step s1O such that microwave output is increased. Alternatively, if the value A/D is larger than another preset value V3, the factor Δ is set to (-P) and the ON period of S of microwave output is reduced by P to (S-P) at step s1O such that microwave output is reduced. If the value A/D falls between the preset values V2 and V3 at step s5, the factor Δ is set to 0 and the ON period of S is not changed. Namely, the microwave output is neither increased or reduced for the period S at step s10.

Fig. 35 shows on-off characteristics of the microwave output in the apparatus K4 in the case where an intermittent method is employed for changing the microwave output. In a predetermined period W, the microwave output is usually turned on during the period S and is turned off during the remaining period of (W-S). This intermittent microwave output assumes S/W of a rated microwave output in which microwave output is held in the ON state continuously. In the case where the microwave output is increased, the ON period of microwave output is set to (S+P). Alternatively, in the case where the microwave output is reduced, the ON period of microwave output is set to (S-P). Thus, it becomes possible to change the microwave output.

Fig. 36 shows relation between time and the value A/D input to the control circuit 210 when controlled in accordance with Fig. 34. In Fig. 36, the lines L2 and L4 represent prior art, while the lines L3 and L5 represent the present invention. In the solid line L1, since the value A/D is disposed between the values V2 and V3 on expiry of period t1, heating is continued by setting the ON period of the microwave output to S. In the broken line L2, the value A/D is smaller than the value V2 on expiry of period t1. Thus, if heating is performed by setting the ON period of the microwave output to S in this case, the value A/D becomes smaller than the value V4 when period t2 expires therefore the temperature of the heating vessel 44 becomes low.

In the one-dot chain line L3, the ON period of microwave output is set to (S+P) when period t1 expires. Hence, the value A/D on expiry of period t2 reaches the value V4 and thus the same quality of finished bread as that of the line Ll can be obtained.

In lines L4 and L5, the value A/D is larger than the value V3 when period t2 expires. In the line L4, heating is subsequently performed by employing the ON period of S. In the line L5, heating is subsequently performed by setting the ON period of microwave output to (S-P).

Fig. 37 shows the processing sequence of the apparatus K4 and is directed to the first kneading process of Fig. 33. If it is found at step s13 that the value A/D is smaller than a value V5, the program flow proceeds to step s15 at which the ON time of microwave output is set to R. If the value A/D falls between values V5 and V6, the ON period of microwave output is set to Q at step s14. If R>Q, the rise in temperature at step s15 becomes faster than that of step s14. Alternatively, if the value A/D is larger than the value V5, the microwave output is turned off at step s16.

Fig. 38 shows the processing sequence of a modification K4' of the apparatus K4, and is directed to the stand process of the second step in Fig. 33 in which the dough is allowed to stand. In Fig. 38, the microwave output is turned off at step s18. Therefore, during repeated execution of steps s18 and s19, if the ambient temperature is low, the heating vessel 44 is also cooled such that temperature of the heating vessel 44 drops, so that the value A/D is reduced. Alternatively, if the ambient temperature is high, the temperature of the heating vessel 44 is also raised and thus, the value A/D is increased. Thus, if it is found at step s20 that the value A/D is smaller than a preset value V7, a factor δ is set to (-V) at step s22. Alternatively, if is found at step s20 that the value A/D is larger than another preset value V8, the factor δ is set to V at step s23. In case when the value A/D falls between the values V7 and V8 at step s20, the factor δ is set to 0 at step s21. Thus, preset temperatures of the subsequent cooking processes from the second kneading to the temperature holding process are corrected.

Fig. 39 shows the relation between the temperature of the heating vessel 44 and the value A/D in cooking of Fig. 38. In Fig. 39, the lines L6, L7 and L8 represent cases of normal temperature, low temperature and high temperature, respectively. In Fig. 39, if control is performed at a preset value V14, the temperature of the heating vessel 44 assumes a value of TempA at normal temperature. However, at low temperature and high temperature, the temperature of the heating vessel 44 assumes values of TempA' and TempA'', respectively. Thus, it becomes difficult to obtain a uniform quality of baked bread. However, in the apparatus K4', correction is made in accordance with the flow chart of Fig. 38 such that the preset value is set to (V14-V) and (V14+V) at low temperature and at high temperature, respectively. As a result, control can be performed at the constant temperature of TempA.

In accordance with the third embodiment of the present invention, since the output of the motor for driving the stirring blade 58 can be reduced at low ambient temperature, production cost of the apparatus can be reduced by employing a motor having a small output.

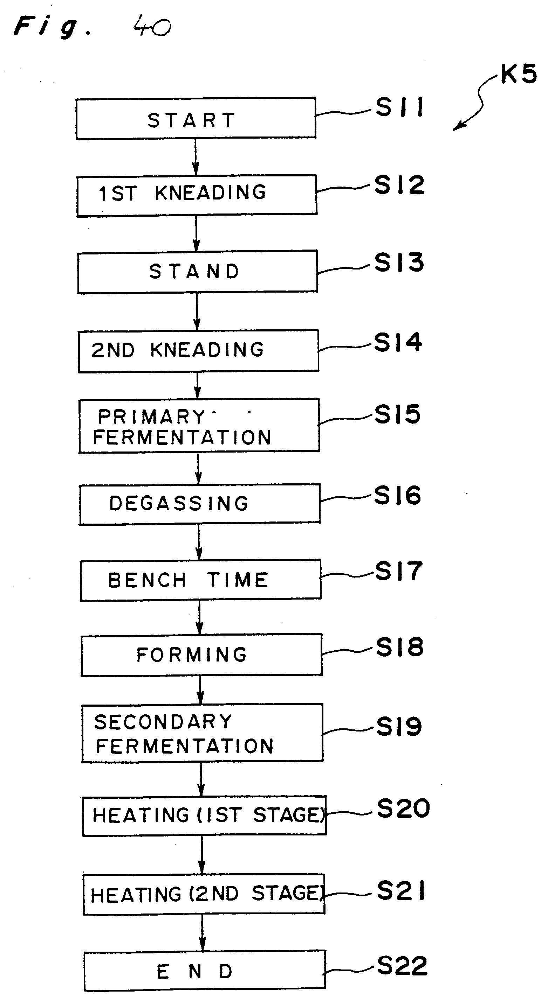

Hereinbelow, a high-frequency heating apparatus K5 according to a fourth embodiment of the present invention is described with reference to Figs. 40 to 41. Fig. 40 shows cooking processes of bread in the apparatus K5. Initially, at step S11, bread ingredients such as flour, butter, sugar, salt, yeast, water, etc. are put into the heating vessel 44 which is made from material which generates heat upon absorption of microwave. The heating vessel 44 is then loaded into the heating chamber 33 and cooking is started by depressing a cooking button, etc. Then, the first kneading process is performed at step S12, the stand process for allowing dough to stand is performed at step S13 and the second kneading process is performed at step S14. Subsequently, the primary fermentation process is performed at step S15, the degassing process is performed at step S16, the bench time is provided at step S17, the forming process for forming dough into the shape of bread is performed at step S18 and the second fermentation process is performed at step S19.

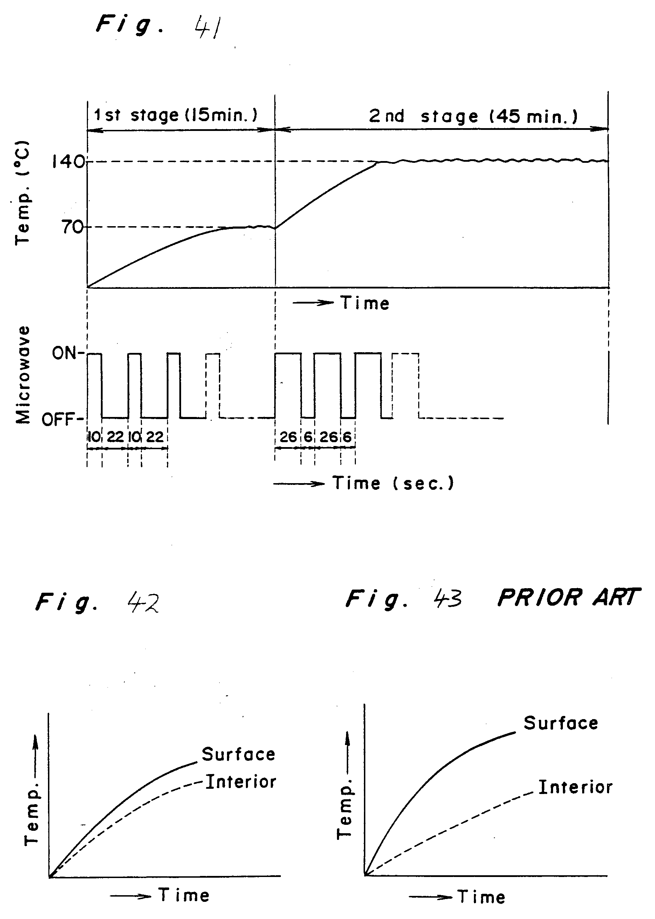

Thereafter, heating by irradiation of microwaves is performed in two stages. In the first stage, the turning on the microwaves for, e.g., 10 sec. and subsequently turning off the microwaves for 2.2 sec. are repeated intermittently at step S20 such that heating temperature reaches about 70°C after 15 min. as shown in Fig. 41. By increasing the degree of heating gradually as described above, the dough is heated gradually by minimizing the difference in the temperature between a surface and an interior of the dough as shown in Fig. 42. Finally, in the second stage, heating is performed at step S21 more powerfully than in the first stage. For example, as shown in Fig. 41, the turning on of microwaves for 26 sec. and the turning off of microwaves for 6 sec. are repeated intermittently at step S21 such that heating is performed for about 45 min. at a temperature of 140°C which is suitable for baking of bread. By the above described steps, the making of bread is completed at step S22. By way of a comparative example, Fig. 43 shows the difference in temperature between a surface and an interior of dough in a prior art high-frequency heating apparatus. In the prior art apparatus of Fig. 43, the difference in temperature between the surface and the interior of dough is large and thus, there is a great difference in the degree of baking between a surface and an interior of the baked bread.

In accordance with the fourth embodiment of the present invention, since the difference in temperature between a surface and an interior of dough during baking can be reduced, it becomes possible to prevent the rapid rise of only the temperature of the surface of dough. Therefore, the problem that the surface of the dough is scorched before the interior of dough is heated can be obviated.

Furthermore, in the fourth embodiment of the present invention, bread having a splendid quality can be obtained by gradual heating.

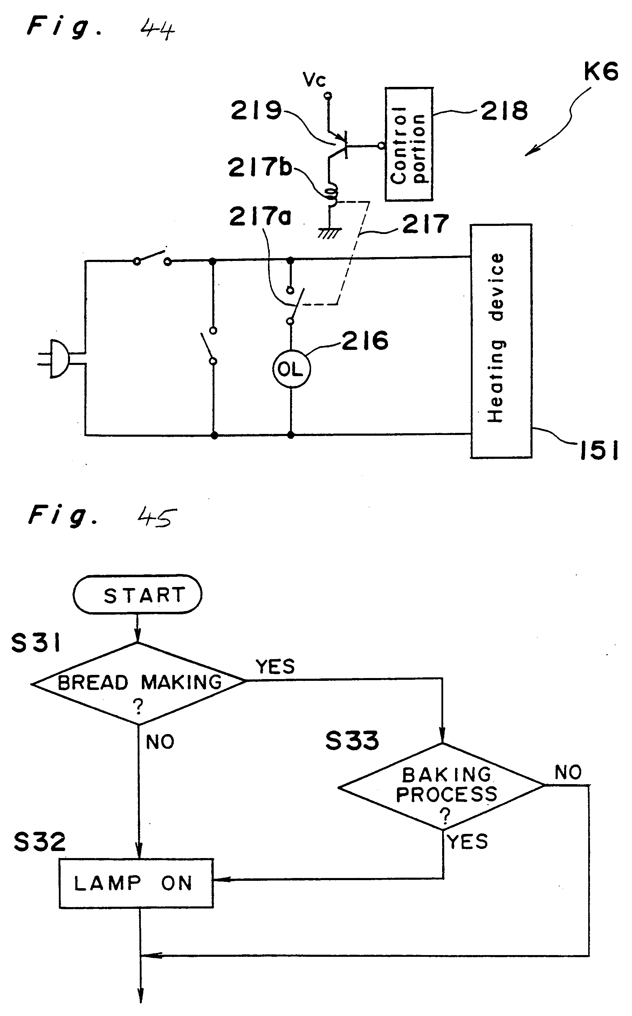

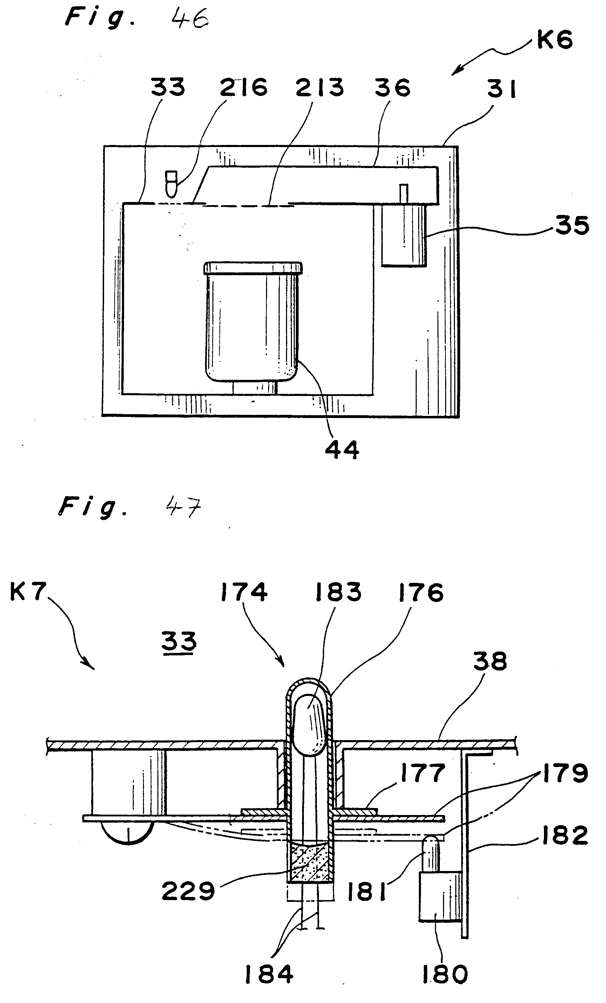

Hereinbelow, a high-frequency heating apparatus K6 according to a fifth embodiment of the present invention is described with reference to Figs. 44 to 46. Fig. 46 shows the apparatus K6 having a bread making function. The apparatus K6 includes a cover 213 for covering an opening of the waveguide 36 and a lamp 216 for illuminating the interior of the heating chamber 33.

Meanwhile, Fig. 44 shows an electric circuit of the apparatus K6. In Fig. 44, a relay contact 217a is connected in series to the lamp 216 and a relay coil 217b for driving the relay contact 217a is connected in series to a transistor 219 which is controlled by the output of a control portion (microcomputer) 218 for controlling the apparatus K6.

Based on a control program stored in the control portion 218, the control portion 218 decides at step S31 whether or not the cooking operation is bread making. In the case of "NO" at step S31, a signal for driving the relay 217 is output to turn on the lamp 216 at step S32. Alternatively, in the case of "YES" at step S31, a decision is made at step S33 as to whether or not the baking process is being performed. In the case of "YES" at step S33, the signal for driving the relay 217 is output to turn on the lamp 216. Hence, during the kneading process or the fermentation process of dough of bread, the lamp 216 is not turned on.

Therefore, in bread baking, by turning on the lamp 216 only during the baking process, it becomes possible to inform the user that the baking process is being performed. As a result, the lamp 216 can have a longer service life with less power consumption compared with a case in which the lamp 216 is turned on throughout the cooking processes for making bread. Furthermore, by turning on the lamp 216 during the baking process, the degree of baking can be easily inspected visually.

Accordingly, in accordance with the fifth embodiment of the present invention, by turning on the lamp, it becomes possible not only to inform the user that the baking process of the bread making operation is being performed, but also to prevent the user from being scorched inadvertently.

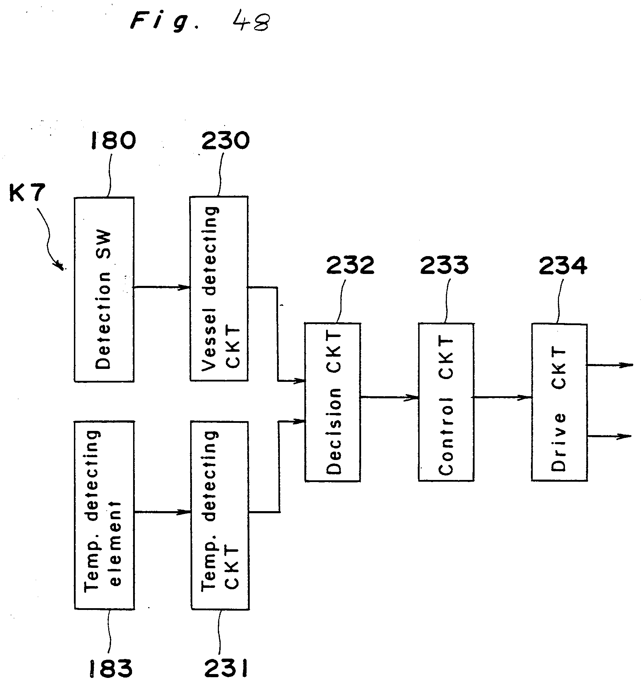

Referring further to Figs. 47 and 48, there is shown a high-frequency heating apparatus K7 according to a sixth embodiment of the present invention. Since the basic construction of the apparatus K7 is similar to that of apparatus K3' of Fig. 22, the description thereof is abbreviated for the sake of brevity. Fig. 47 shows the sensor 174 for detecting the presence or absence of the heating vessel 44. Namely, the temperature detecting element 183 such as a thermistor is inserted into the tube 176 so as to be secured in the tube 176 by resin 229. Other constructions of the sensor 174 are similar to those of apparatus K3' of Fig. 23, the description of which is abbreviated for the sake of brevity.

Fig. 48 shows an electric circuit of the apparatus K7. In Fig. 48, detection signals from the detection switch 180 and the temperature detecting element 183 are input, via a vessel detecting circuit 230 and a temperature detecting circuit 231 respectively, to a decision circuit 232 constituted by a single LSI, in which the contents of the detection signals are decided. The decision signal of the decision circuit 232 is input to a control circuit 233. In accordance with a cooking mode selected by an operating switch (not shown), the control circuit 233 controls the operation of the magnetron 35, the electric motor 50, etc. via a drive circuit 234.

Herebelow, the operation of the apparatus K7 of the above described arrangement is described. Initially, when the heating vessel 44 containing the bread ingredients such as flour, butter, sugar, salt, yeast, water, etc. is placed at a predetermined position in the heating chamber 33, the lower face of the heating vessel 44 depresses the tube 176 downwardly. The elastic plate 179 is thus bent downwardly and the contact 181 of the detection switch 180 is depressed by the free end portion of the elastic plate 179 and turns on the detection switch 180. When setting of the heating vessel 44 has been completed as described above, the electric motor 50 is started by command from the control circuit 233 to rotate the stirring blade 58 of the heating vessel 44. Thus, the above described materials of bread are kneaded so as to produce dough. After kneading, the dough is heated by microwaves from the magnetron 35, or heat produced by a heater (not shown) provided in the heating chamber 33 in order to be fermented and baked.

It is necessary that the heating performed by the magnetron 35 or the heater is controlled accurately in accordance with temperature of the dough to be heated. Since the temperature detecting element 183 is accommodated in the tube 176 held in contact with the bottom of the heating vessel 44, the temperature detecting element 183 detects the temperature of the dough through the bottom wall of the heating vessel 44. Hence, the temperature detecting element 183 can detect the actual temperature of the dough accurately without being affected by the ambient temperature of the heating chamber 33. Therefore, accurate temperature control is performed on the basis of temperature of dough.

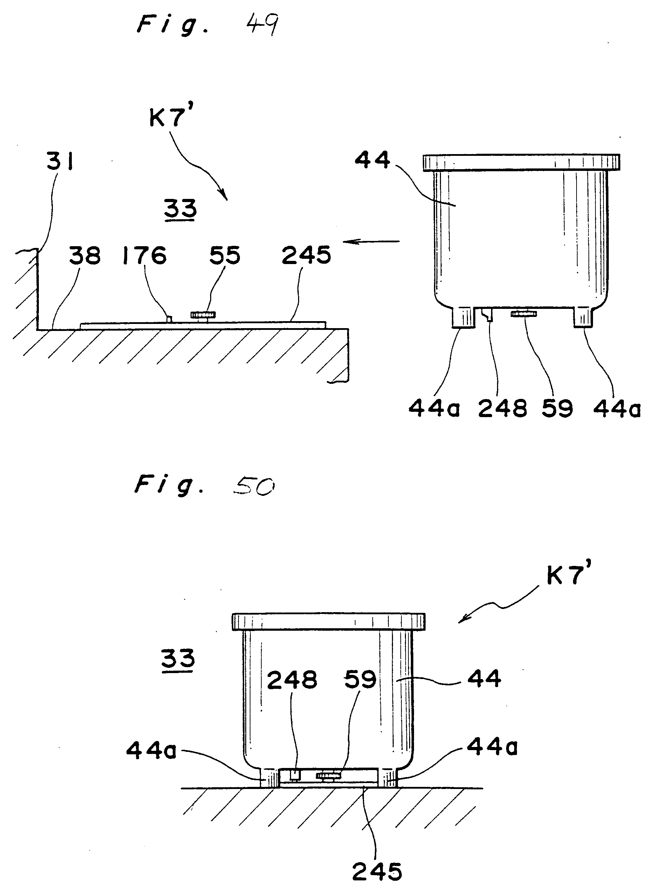

Referring to Figs. 49 to 52, there is shown a modification K7' of the apparatus K7. In the apparatus K7, the heating vessel 44 is placed on the bottom of the heating chamber 33 from above so as to depress the tube 176 downwardly. However, in the apparatus K7', the heating vessel 44 is slid into the heating chamber 33 rearwards from front of the heating chamber 33 so as to depress the tube 176 downwardly. As shown in Figs. 49 and 50, a pair of legs 44a are provided on the lower face of the heating vessel 44 and a guide 245 for guiding the legs 44a in forward and rearward directions of the apparatus housing 31 is provided on an inner face of the bottom wall 38 of the heating vessel 33 such that the heating vessel 44 can be rearwardly inserted into the heating chamber 33 horizontally from the front of the heating chamber 33.

Transmission gear 59 provided on the heating vessel 44 and gear 55 engageable with the transmission gear 59 is provided at the bottom of the heating chamber 33. When the heating vessel 44 has been loaded at a predetermined position in the heating chamber 33, the heating vessel 44 engages with the guide 245 and it becomes possible to prevent vibrations of the heating vessel 44 during kneading of dough.

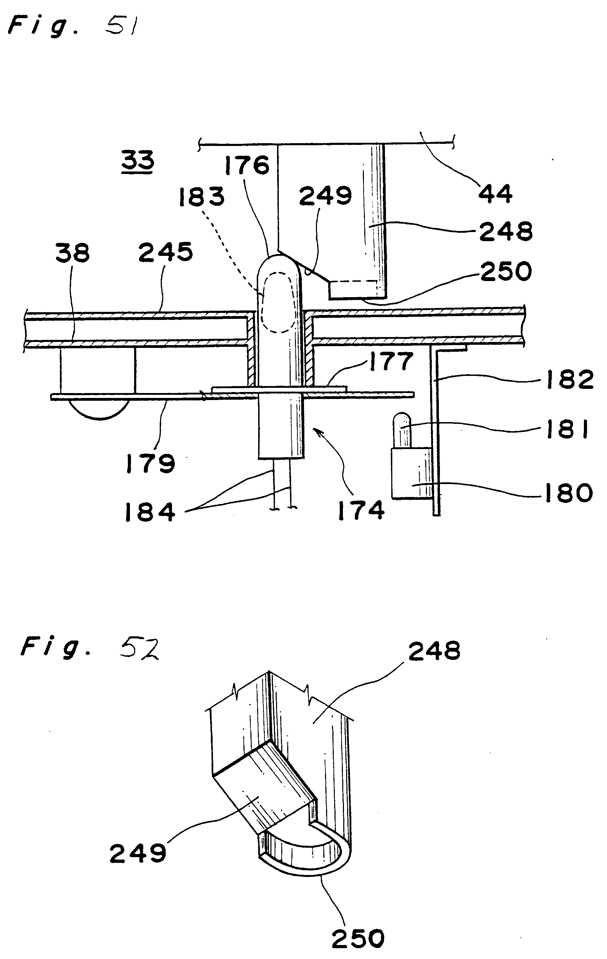

As is clearly shown in Figs. 51 and 52, a projection 248 for depressing the tube 176 downwardly is provided on the lower face of the heating vessel 44. The projection 248 is formed with its side opposing the tube 176 having an oblique face 249. At a lower end of the oblique face 249, a skirt 250 having an opening opposing the tube 176 is provided.

In the apparatus K7' of the above described arrangement, the heating vessel 44 slides into the heating chamber 33 by engaging the legs 44a with the guide 245, and the oblique face 249 of the projection 248 initially contacts the tube 176. Hence, the tube 176 is smoothly depressed downwardly by the oblique face 249 so as to fit into the skirt 250 and the heating vessel 44 is positioned in the direction of insertion of the heating vessel 44 by contact of the skirt 250 with the tube 176. At this time, the transmission gear 59 of the heating vessel 44 engages with the gear 55 of the apparatus housing 31 such that the stirring blade 58 in the heating vessel 44 can be rotated.

When the tube 176 has been depressed downwardly by the projection 248, the detection switch 180 is turned on by the elastic plate 179, so that presence of the heating vessel 44 is detected by the detection switch 180 and the temperature of the dough is detected through the bottom wall of the heating vessel 44 by the temperature detecting element 183 in the same manner as in the apparatus K7. In the apparatus K7', since the distal end portion of the tube 176 is enclosed by the skirt 250, the temperature detecting element 183 accommodated in the tube 176 is not affected by ambient heat and therefore, can detect the temperature of the dough accurately.

In the apparatus K7 and K7', although the temperature detecting element 183 is inserted into the tube 17, the temperature detecting element 183 is not necessarily required to be wholly covered by the tube 176 but may be partially exposed out of the tube 176. Furthermore, in the apparatus K7 and K7', although the heating vessel 44 provided with the stirring blade 58 and having the bread making function has been described it can be replaced by any vessel which contains an article to be heated.

Accordingly, in accordance with the sixth embodiment of the present invention, since the temperature detecting element is provided in the tube held in contact with the heating vessel, the temperature of the article in the heating vessel can be detected by the temperature detecting element through the bottom wall of the heating vessel. Therefore, since the temperature of the article in the heating vessel can be detected accurately without being affected by the ambient temperature in the heating chamber, cooking requiring accurate temperature control, for example, baking of bread can be performed properly.

Furthermore, in the sixth embodiment of the present invention, since the vessel detecting portion for detecting the heating vessel also acts as the temperature detecting portion, the construction of the vessel detecting portion and the temperature detecting portion is simplified.

Moreover, in the sixth embodiment of the present invention, since the temperature detecting element is accommodated in the tube, the temperature detecting element is protected by the wall of the tube and thus, damage to the temperature detecting element can be prevented.

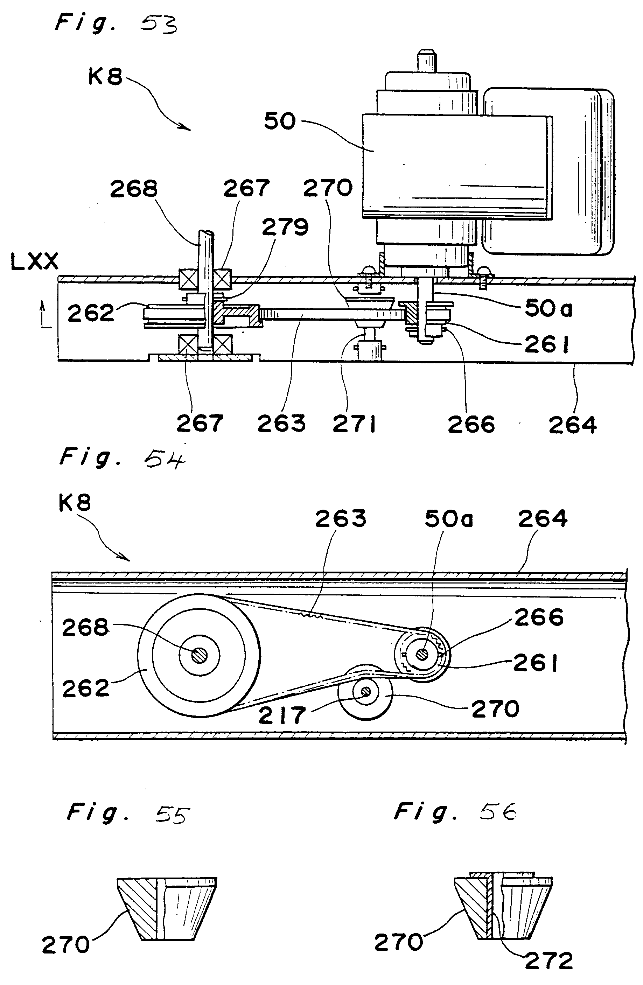

Referring finally to Figs. 53 to 56, there is shown a timing belt mechanism employed in a high-frequency heating apparatus K8 according to a seventh embodiment of the present invention. The timing belt mechanism includes a driving pulley 261, a driven pulley 262 and a timing belt 263 which is trained over the pulleys 261 and 262 so as to act as a power transmission member. The pulleys 261 and 262 are disposed in an identical horizontal plane and spaced a predetermined distance from each other. This timing belt mechanism is integrally supported by a base member 264 having a predetermined length. At the right side of the base member 264 in Fig. 53, the driving pulley 261 is mounted on the output shaft 50a of the electric motor 50 and is secured to the output shaft 50a by a support pin 266. At the left side of the base member 264 in Fig. 53, the driven pulley 262 is mounted on a shaft 268 and is secured to the shaft 268 by a pin 279. The shaft 268 is rotatably supported by a pair of bearings 267 which are disposed at upper and lower portions of the base member 264, respectively. The shaft 268 is arranged to be coupled with a kneading member (not shown).

Furthermore, an idler pulley 270 acting as an auxiliary rotary member is provided outside an intermediate portion of the timing belt 273 in a running direction of the timing belt 273 and depresses the timing belt 273 so as to strain the timing belt 273. The idler pulley 270 is rotatably supported by a shaft 271 fixed to the base member 264. This idler pulley 270 is made of elastic material such as silicone rubber or chloroprene foam and is formed to have a cylindrical outer periphery or a tapered outer periphery as shown in Fig. 55. Therefore, abnormal noises produced during engagement of the timing belt 263 with the pulleys 261 and 262 are transmitted to the idler pulley 270 through the timing belt 263 and therefore is absorbed by the idler pulley 270. Furthermore, vibrations of the timing belt 263 which are generated together with the abnormal noises are also absorbed by the idler pulley 270. Thus, noise produced by vibrations of the timing belt 263 is also absorbed by the idler pulley 270.

In the case where the idler pulley 270 has the tapered outer periphery as shown in Fig. 55, the timing belt 263 is also inclined along the tapered outer periphery of the idler pulley 270. Therefore, the teeth of the timing belt 263 are obliquely brought into engagement with teeth of the pulleys 261 and 262. Therefore, the teeth of the timing belt 263 progressively engage with the teeth of the pulleys 261 and 262 from partial engagement to full engagement. The present inventors have found that an effect similar to the engaging of helical gears is achieved and as a result abnormal noise produced at the time of engagement and disengagement between the timing belt 263 and the pulleys 261 and 262 is reduced over that than in known arrangements. Furthermore, if the idler pulley 270 has the tapered outer periphery, area of contact of the timing belt 263 with the idler pulley 270 becomes larger than that for the idler pulley 270 having the cylindrical outer periphery. Therefore, even if the timing belt 263 is vibrated through variations of load, the timing belt 263 is less likely to be disengaged from the idler pulley 270 and thus, vibratory noise from the timing belt 263 due to disengaging of the timing belt 263 from the idler pulley 270 is reduced.

When the idler pulley 270 is rotated at high speed, it is considered that friction between the idler pulley 270 and the shaft 271 for supporting the idler pulley 270 is increased with the result that friction noise is produced. However, as shown in Fig. 56, if a bushing 272 made of material having excellent sliding properties, for example polyacetal and carbon, is press fitted into an inner periphery of the idler pulley 270, which is brought into sliding contact with the shaft 271, production of the above mentioned friction noise can be effectively avoided.

In the above description of the seventh embodiment of the present invention, the idler pulley 270 is disposed outside the timing belt 263 but is not limited to this arrangement. Therefore, even if the idler pulley 270 is disposed inside the timing belt 263, the same effects referred to above can be achieved. In the above embodiment, the present invention is applied to the timing belt mechanism but can also be applied to other lower transmission mechanisms having ropes, chains, etc.

As is clear from the foregoing, in the power transmission mechanism of the high-frequency heating apparatus, the power transmission member trained over the two rotary members spaced away from each other is depressed by the auxiliary rotary member made of elastic material. Therefore, abnormal noise, which is produced at the time of engagement between the power transmission member and the rotary members and are transmitted to the auxiliary rotary member through the power transmission member, are absorbed by the auxiliary rotary member. Since vibrations of the power transmission member, which are produced together with the above described abnormal noise, are also absorbed by the auxiliary rotary member, vibratory noise, caused by vibrations of the power transmission member are also absorbed by the auxiliary rotary member.

As a result, in the power transmission mechanism, abnormal noise or vibratory noise produced at the time of engagement between the power transmission member and the rotary members can be reduced, thus the cooking apparatus can be operated more silently.

If the auxiliary rotary member is formed into a tapered shape, abnormal noise can be reduced more effectively.

Although the present invention has been fully described by way of example with reference to the accompanying drawings, it is to be noted here that various changes and modifications will be apparent to those skilled in the art. Therefore, unless otherwise such changes and modifications depart from the scope of the present invention, they should be construed as being included therein.

There are described above novel features which the skilled man will appreciate give rise to advantages.

## Claims

1. A heating apparatus (K2) wherein a heating vessel (44) which includes a rotatable stirring blade (58) for kneading cooking materials and a turntable (39) for supporting an article to be heated are selectively and interchangeably loadable in a heating chamber (33), said heating apparatus (K2) comprising:
a drive motor (50) for rotating the stirring blade (58) when said heating vessel (44) is loaded in said heating chamber and for rotating the turntable (39) when said turntable is loaded in said heating chamber;
a detection means (130) for detecting which of said heating vessel (44) and said turntable (39) is loaded in said heating chamber (33); and
a rotational speed changeover means (132) for changing over a rotational speed of said drive motor (50) on the basis of a result of detection of said detection means (130) so as to provide different speeds of rotation for said turntable and said stirring blade.

2. A heating apparatus (K2) as claimed in claim 1, wherein said drive motor (50) has a rated rotational speed corresponding to a specific rotational speed required for said stirring blade (58), said heating apparatus (K2) further comprising:
a rotational speed detecting means (119) for detecting the rotational speed of said drive motor (50);
said rotational speed changeover means (132) including a rotational speed control means (133) which is responsive to the detection by said detection means that said turntable (39) is loaded in said heating chamber to perform feedback control of said drive motor (50) on the basis of the rotational speed of said drive motor (50) detected by said rotational speed detecting means (119), so as to set said drive motor (50) to a predetermined rotational speed for rotating said turntable (39).

3. A heating apparatus (K2) as claimed in claim 1, further comprising a rotational speed detecting means (119) for detecting the rotational speed of said drive motor (50);
said rotational speed changeover means (132) including a rotational speed control means (133) for determining whether the rotational speed of said drive motor (50) detected by said rotational speed detecting means (119) is normal or abnormal and for stopping said drive motor (50) when the rotational speed of said drive motor (50) detected by said rotational speed detecting means (119) is abnormal.

4. A heating apparatus (K3) as claimed in any preceding claim further comprising:
a drive unit (144) including said drive motor (50) for heating and driving said heating vessel (44); and
a control unit (145) for controlling said drive unit (144);
said control unit (145) including a door switch (147) for detecting opening or closing of a door (34) of said heating chamber (33) and a control circuit (148) which stops said drive unit (144) in response to a signal indicating opening of said door (34) from said door switch (147) during operation of said drive unit (144) and then, automatically restarts said drive unit (144) in response to a signal indicating closing of said door (34) from said door switch (147).

5. A heating apparatus (K3') as claimed in claim 4, wherein said control unit (145) further includes a sensor (174) for detecting presence or absence of said heating vessel (44), and the control circuit (148) automatically restarts said drive unit (144) only when both said signal indicating closing of said door (34) is output from said door switch (147) and a signal indicating presence of said heating vessel (44) is output from said sensor (174).

6. A heating apparatus (K3''') as claimed in claim 5, wherein said control unit (145) includes a warning portion (198) for issuing a warning of abnormal operation of said heating apparatus (K3''') and a control circuit (148) which outputs, in response to said signal indicating opening of said door (34) from said door switch (34) or said signal indicating absence of said heating vessel (44) from said sensor (174), to said warning portion (198) a signal for commanding said warning portion (198) to issue the warning.

7. A heating apparatus as claimed in any preceding claim, wherein the heating apparatus is a high-frequency heating apparatus.

8. A heating apparatus (K4) as claimed in claim 7 wherein, said heating vessel (44) has an outer periphery coated with a film for generating heat upon absorption of microwaves;
said heating apparatus further comprising
a microwave generating means (35) for generating microwaves;
a temperature detecting means (183) for detecting a temperature of said heating vessel (44); and
a control means (210) which drives said microwave generating means (35) during kneading of the cooking materials so as to heat said heating vessel (44) to a predetermined temperature.

9. A heating apparatus (K5) as claimed in claim 8, wherein said heating vessel (44) is for containing bread ingredients so as to bake bread when heated, heating of said heating vessel (44) being performed in first and second stages such that heating during the second stage is performed more powerfully than that during the first stage.

10. A heating apparatus (K6) as claimed in any preceding claim and having a bread making function, in which said heating vessel (44) is provided in said heating chamber (33) so as to automatically perform kneading, fermentation and baking of bread dough, the apparatus further comprising:
a lamp (216) for illuminating an interior of said heating chamber (33); and
a lamp control means (218) for turning on said lamp (216) only in a baking process during an operation for making bread.

11. A heating apparatus (K7) as claimed in any of claims 1 to 4, further comprising:
a contact member (176) for detecting presence or absence of a heating vessel (44) provided at a bottom of said heating chamber (33); and
a temperature detecting means (183) for detecting a temperature of said heating vessel (44) provided in said contact member (176).

12. A heating apparatus (K8) as claimed in any preceding claim provided with a power transmission mechanism in which a power transmission member (263) is trained over first and second rotary members (261, 262) spaced away from each other, and having an auxiliary rotary member (270) made of elastic material provided at an intermediate portion of said power transmission member (263) in a running direction of said power transmission member (263) and which said auxiliary rotary member depresses said power transmission member (263) so as to apply a tension to said power transmission member (263).

13. A heating apparatus (K8) as claimed in claim 12, wherein said auxiliary rotary member (270) has a tapered outer peripheral surface.

## Patentansprüche

1. Heizgerät (K2), bei dem ein Heizgefäß (44) mit einer drehbaren Rührschaufel (58) zum Kneten von Kochzutaten und ein Drehteller (39) zum Aufnehmen eines zu erhitzenden Gegenstandes wahlweise und auswechselbar in eine Heizkammer (33) einsetzbar sind, wobei das Heizgerät (K2) folgendes aufweist:
- einen Antriebsmotor (50) zum Drehen der Rührschaufel (58) bei eingesetztem Heizgefäß (44) in die Heizkammer und zum Drehen des Drehtellers (39) bei eingesetztem Drehteller in die Heizkammer;
- ein Detektormittel (130), das erfaßt, ob das Heizgefäß (44) oder der Drehteller (39) in die Heizkammer (33) eingesetzt ist; und
- ein Drehzahlumschaltmittel (132) zum Umschalten einer Drehzahl des Antriebsmotors (50) basierend auf dem Resultat der Erfassung vom Detektormittel (130), um unterschiedliche Drehzahlen für den Drehteller und die Rührschaufel zu liefern.

2. Heizgerät (K2) nach Anspruch 1, bei dem der Antriebsmotor (50) eine Nenndrehzahl aufweist, die einer spezifischen, für die Rührschaufel (58) erforderlichen Drehzahl entspricht, wobei das Heizgerät (K2) ferner aufweist:
- Drehzahlerfassungsmittel (119) zum Erfassen der Drehzahl des Antriebsmotors (50);
- Drehzahlumschaltmittel (132), das ein Drehzahlsteuermittel (133) aufweist, welches auf die Erfassung des Detektormittels, daß der Drehteller (39) in die Heizkammer eingesetzt ist, reagiert, um basierend auf der von dem Drehzahlerfassungsmittel (119) erfaßten Drehzahl des Antriebsmotors (50) ein Regeln des Antriebsmotors (50) zu vollziehen, um bei dem Antriebsmotor (50) eine vorgegebene Drehzahl zum Drehen des Drehtellers (39) einzustellen.

3. Heizgerät (K2) nach Anspruch 1, welches ferner ein Drehzahlerfassungsmittel (119) zum Erfassen der Drehzahl des Antriebsmotors (50) aufweist;
wobei das Drehzahlumschaltmittel (132) eine Drehzahlsteuermittel (133) aufweist, um zu bestimmen, ob die vom Drehzahlerfassungsmittel (119) erfaßte Drehzahl des Antriebsmotors (50) normal oder anormal ist, und um den Antriebsmotor (50) zu stoppen, wenn die vom Drehzahlerfassungsmittel (119) erfaßte Drehzahl des Antriebsmotors (50) anormal ist.

4. Heizgerät (K3) nach einem der vorgenannten Ansprüche, welches ferner aufweist:
- Antriebseinheit (144), die den Antriebsmotor (50) zum Heizen und Antreiben des Heizgefäßes (44) umfaßt; und
- Steuereinheit (145) zum Steuern der Antriebseinheit (144);
wobei die Steuereinheit (145) einen Türschalter (147) zum Erfassen eines Öffnens oder Schließens einer Tür (34) der Heizkammer (33) und eine Steuerschaltung (148) umfaßt, die die Antriebseinheit (144) als Reaktion auf ein das Öffnen der Tür (34) anzeigendes Signal vom Türschalter (147) während des Betriebes der Antriebseinheit (144) stoppt und anschließend die Antriebseinheit (144) automatisch wieder startet als Reaktion auf ein das Schließen der Tür (34) anzeigendes Signal vom Türschalter (147).

5. Heizgerät (K3') nach Anspruch 4, bei dem die Steuereinheit (145) ferner einen Sensor (174) zum Erfassen des Vorhandenseins oder Nichtvorhandenseins des Heizgefäßes (44) beinhaltet und bei dem die Steuerschaltung (148) die Antriebseinheit (144) automatisch nur dann wieder startet, wenn sowohl ein das Schließen der Tür (34) anzeigendes Signal vom Türschalter (147) als auch ein das Vorhandensein des Heizgefäßes (44) anzeigendes Signal vom Sensor (174) ausgegeben werden.

6. Heizgerät (K3''') nach Anspruch 5, bei dem die Steuereinheit (145) einen Warnabschnitt (198) zum Ausgeben einer Warnung bezüglich eines anormalen Betriebes des Heizgerätes (K3''') und eine Steuerschaltung (148) umfaßt, welche als Reaktion auf das ein Öffnen der Tür (34) anzeigende Signal vom Türschalter (34) oder auf das ein Nichtvorhandensein des Heizgefäßes (44) anzeigende Signal vom Sensor (174) ein Signal an den Warnabschnitt (198) ausgibt, um den Warnabschnitt (198) zu veranlassen, die Warnung auszugeben.

7. Heizgerät nach einem der vorgenannten Ansprüche, wobei das Heizgerät ein Hochfrequenzheizgerät ist.

8. Heizgerät (K4) nach Anspruch 7, bei dem das Heizgefäß (44) eine mit einem Film zum Erzeugen von Wärme bei Asorption von Mikrowellen beschichtete Außenfläche aufweist, wobei das Heizgerät ferner aufweist:
- Mikrowellenerzeugungsmittel (35) zum Erzeugen von Mikrowellen;
- Temperaturerfassungsmittel (183) zum Erfassen einer Temperatur des Heizgefäßes (44); und
- Steuermittel (210), das das Mikrowellenerzeugungsmittel (35) während des Knetens der Kochzutaten steuert, um die Wärme des Heizgefäßes (44) auf eine vorgegebene Temperatur zu bringen.

9. Heizgerät (K5) nach Anspruch 8, bei dem das Heizgefäß (44) dazu da ist, die Brotzutaten aufzunehmen, um beim Heizen zu Brot gebacken zu werden, wobei das Heizen des Heizgefäßes (44) dergestalt in einem ersten und einem zweiten Stadium erfolgt, daß während des zweiten Stadiums stärker als während des ersten Stadiums geheizt wird.

10. Heizgerät (K6) mit einer Brotherstellungsfunktion nach einem der vorgenannten Ansprüche, bei dem das Heizgefäß (44) in der Heizkammer (33) vorgesehen ist, um ein automatisches Kneten, Gären und Backen von Brotteig durchzuführen, wobei das Gerät ferner aufweist:
- Lampe (216) zum Beleuchten eines Inneren der Heizkammer (33); und
- Lampensteuermittel (218) zum ausschließlichen Anschalten der Lampe (216) bei einem Backvorgang während eines Brotherstellungsbetriebes.

11. Heizgerät (K7) nach einem der Ansprüche 1 bis 4, das ferner aufweist:
- an einer Unterseite der Heizkammer (33) vorgesehenes Kontakteil (176) zum Erfasssen des Vorhandenseins oder Nichtvorhandenseins eines Heizgefäßes (44); und
- in dem Kontaktteil (176) vorgesehenes Temperaturerfassungsmittel (183) zum Erfassen der Temperatur des Heizgefäßes (44).

12. Heizgerät (K8) nach einem der vorgenannten Ansprüche, das mit einem Kraftübertragungsmechanismus ausgestattet ist, bei dem ein Kraftübertragungsteil (263) über voneinander beabstandete erste und zweite Drehteile (261, 262) gespannt ist und der ein Hilfsdrehteil (270) aus elastischem Material aufweist, welches an einem Zwischenabschnitt des Kraftübertragungsteiles (263) in einer Laufrichtung des Kraftübertragungsteiles (263) vorgesehen ist und welches das Kraftübertragungsteil (263) nach unten drückt, um eine Spannung auf das Kraftübertragungsteil (263) zu bringen.

13. Heizgerät (K8) nach Anspruch 12, bei dem das Hilfsdrehteil (270) eine konisch zulaufende Außenfläche aufweist.

## Revendications

1. Appareil de chauffage (K2) dans lequel un récipient de chauffe (44), qui inclut une lame tournante d'agitation (58) pour pétrir des matières de cuisson, et un plateau tournant (39) pour supporter un produit à chauffer peuvent être chargés de façon sélective et interchangeable dans une chambre de chauffe (33), ledit appareil de chauffage (K2) comprenant:
un moteur d'entraînement (50) pour faire tourner la lame d'agitation (58) lorsque ledit récipient de chauffe (44) est chargé dans ladite chambre de chauffe et pour faire tourner le plateau tournant (39) lorsque ledit plateau tournant est chargé dans ladite chambre de chauffe;
des moyens de détection (130) pour détecter celui parmi ledit récipient de chauffe (44) et ledit plateau tournant (39) qui est chargé dans ladite chambre de chauffe (33); et
des moyens d'inversion de vitesse de rotation (132) pour inverser une vitesse de rotation dudit moteur d'entraînement (50) sur la base d'un résultat de détection desdits moyens de détection (130) afin de fournir des vitesses de rotation différentes pour ledit plateau tournant et ladite lame d'agitation.

2. Appareil de chauffage (K2) selon la revendication 1, dans lequel ledit moteur d'entraînement (50) a une vitesse de rotation nominale correspondant à une vitesse de rotation spécifique requise pour ladite lame d'agitation (58), ledit appareil de chauffage (K2) comprenant également:
des moyens de détection de vitesse de rotation (119) pour détecter la vitesse de rotation dudit moteur d'entraînement (50);
lesdits moyens d'inversion de vitesse de rotation (132) incluant des moyens de commande de vitesse de rotation (133), qui répondent à la détection par lesdits moyens de détection du fait que ledit plateau tournant (39) est chargé dans ladite chambre de chauffe, pour effectuer une commande de contre-réaction dudit moteur d'entraînement (50) sur la base de la vitesse de rotation dudit moteur d'entraînement (50) détectée par lesdits moyens de détection de vitesse de rotation (119), de façon à régler ledit moteur d'entraînement (50) à une vitesse de rotation prédéterminée pour actionner en rotation ledit plateau tournant (39).

3. Appareil de chauffage (K2) selon la revendication 1, comprenant également des moyens de détection de vitesse de rotation (119) pour détecter la vitesse de rotation dudit moteur d'entraînement (50);
lesdits moyens d'inversion de vitesse de rotation (132) incluant des moyens de commande de vitesse de rotation (133) pour déterminer si la vitesse de rotation dudit moteur d'entraînement (50) détectée par lesdits moyens de détection de vitesse de rotation (119) est normale ou anormale et pour arrêter ledit moteur d'entraînement (50) lorsque la vitesse de rotation dudit moteur d'entraînement (50) détectée par lesdits moyens de détection de vitesse de rotation (119) est anormale.

4. Appareil de chauffage (K3) selon l'une quelconque des revendications précédentes comprenant également:
une unité d'entraînement (144) incluant ledit moteur d'entraînement (50) pour chauffer et actionner ledit récipient de chauffe (44); et
une unité de commande (145) pour commander ladite unité d'entraînement (144);
ladite unité de commande (145) incluant un interrupteur de porte (147) pour détecter l'ouverture ou la fermeture d'une porte (34) de ladite chambre de chauffe (33) et un circuit de commande (148) qui arrête ladite unité d'entraînement (144) en réponse à un signal indiquant l'ouverture de ladite porte (34) et provenant dudit interrupteur de porte (147), pendant le fonctionnement de ladite unité d'entraînement (144), et fait ensuite redémarrer automatiquement ladite unité d'entraînement (144) en réponse à un signal indiquant la fermeture de ladite porte (34) et provenant dudit interrupteur de porte (147).

5. Appareil de chauffage (K3') selon la revendication 4, dans lequel ladite unité de commande (145) inclut également un détecteur (174) pour détecter la présence ou l'absence dudit récipient de chauffe (44), et le circuit de commande (148) fait redémarrer automatiquement ladite unité d'entraînement (144) seulement lorsque, à la fois, ledit signal indiquant la fermeture de ladite porte (34) est délivré par ledit interrupteur de porte (147) et un signal indiquant la présence dudit récipient de cuisson (44) est délivré par ledit détecteur (174).

6. Appareil de chauffage (K3''') selon la revendication 5, dans lequel ladite unité de commande (145) inclut une partie de signal d'avertissement (198) pour émettre un signal d'avertissement indiquant un fonctionnement anormal dudit appareil de chauffage (K3''') et un circuit de commande (148) qui délivre, en réponse audit signal indiquant l'ouverture de ladite porte (34) et provenant dudit interrupteur de porte (34) ou audit signal indiquant l'absence dudit récipient de chauffe (44) et provenant dudit détecteur (174), à ladite partie d'avertissement (198), un signal pour commander à ladite partie d'avertissement (198) de délivrer le signal d'avertissement.

7. Appareil de chauffage selon l'une quelconque des revendications précédentes, dans lequel l'appareil de chauffage est un appareil de chauffage à haute fréquence.

8. Appareil de chauffage (K4) selon la revendication 7, dans lequel ledit récipient de chauffe (44) comprend une périphérie externe revêtue d'un film pour générer de la chaleur par absorption de micro-ondes;
ledit appareil de chauffage comprenant également des moyens de génération de micro-ondes (35) pour générer des micro-ondes;
des moyens de détection de température (183) pour détecter une température dudit récipient de chauffe (44); et
des moyens de commande (210) qui commandent lesdits moyens de génération de micro-ondes (35) pendant le pétrissage des matières de cuisson afin de chauffer ledit récipient de chauffe (44) à une température prédéterminée.

9. Appareil de chauffage (K5) selon la revendication 8, dans lequel ledit récipient de chauffe (44) est destiné à contenir des ingrédients de pain afin de cuire du pain lorsqu'il est chauffé, la chauffe dudit récipient de chauffe (44) étant effectuée en des première et seconde étapes de telle manière que la chauffe pendant la seconde étape est effectuée avec davantage de puissance que pendant la première étape.

10. Appareil de chauffage (K6) selon l'une quelconque des revendications précédentes et comprenant une fonction de fabrication de pain, dans lequel ledit récipient de chauffe (44) est prévu dans ladite chambre de chauffe (33) afin d'effectuer automatiquement le pétrissage, la fermentation et la cuisson de la pâte de pain, l'appareil comprenant également:
une lampe (216) pour éclairer une partie intérieure de ladite chambre de chauffe (33); et
des moyens de commande de lampe (218) pour mettre en marche ladite lampe (216) seulement lors d'un traitement de cuisson pendant une opération de fabrication de pain.

11. Appareil de chauffage (K7) selon l'une quelconque des revendications 1 à 4, comprenant également:
un élément formant contact (176) pour détecter la présence ou l'absence d'un récipient de chauffe (44) prévu au niveau d'un fond de ladite chambre de chauffe (33); et
des moyens de détection de température (183) pour détecter une température dudit récipient de chauffe (44) et prévus dans ledit élément formant contact (176).

12. Appareil de chauffage (K8) selon l'une quelconque des revendications précédentes, équipé d'un mécanisme de transmission de puissance dans lequel un élément de transmission de puissance (263) est entraîné par-dessus des premier et second éléments rotatifs (261, 262) écartés l'un de l'autre, et comprenant un élément rotatif auxiliaire (270) constitué d'un matériau élastique prévu au niveau d'une partie intermédiaire dudit élément de transmission de puissance (263) dans une direction de marche dudit élément de transmission de puissance (263), et dont ledit élément rotatif auxiliaire appuie sur ledit élément de transmission de puissance (263) afin d'appliquer une tension audit élément de transmission de puissance (263).

13. Appareil de chauffage (K8) selon la revendication 12, dans lequel ledit élément rotatif auxiliaire (270) comprend une surface périphérique externe conique.
